# EUROPEAN PATENT SPECIFICATION

(11) **EP 4 655 910 B1**
(45) Date of publication and mention of the grant of the patent: **04.03.2026**
(21) Application number: 23703662.9
(22) Date of filing: 27.01.2023
(51) Int. Cl.: H04L 9/40, H04W 12/80, H04W 4/029, H04W 88/18

(54) **LAWFUL INTERCEPTION IN A VISITED COMMUNICATIONS NETWORK**
LEGALES ABFANGEN IN EINEM BESUCHTEN KOMMUNIKATIONSNETZ
INTERCEPTION LÉGALE DANS UN RÉSEAU DE COMMUNICATION VISITÉ

(43) Date of publication of application: 03.12.2025
(73) Proprietor: Telefonaktiebolaget LM Ericsson (publ), 164 83 Stockholm (SE)
(72) Inventor: FIORILLO, Lorenzo, 81020 San Nicola la Strada (CE) (IT); GARRUBA, Angelo, Frisco, Texas 75035 (US)
(74) Representative: Ericsson
(86) International application number: PCT/SE2023/050070
(87) International publication number: WO 2024/158322

(56) References cited:
- "3rd Generation Partnership Project; Technical Specification Group Services and System Aspects; Security; Lawful Interception (LI) architecture and functions (Release 18)", vol. SA WG3, no. V18.2.0, 22 December 2022 (2022-12-22), pages 1 - 170, XP052234772, Retrieved from the Internet <URL:https://ftp.3gpp.org/Specs/archive/33_series/33.127/33127-i20.zip 33127-i20.docx> [retrieved on 20221222]
- "3rd Generation Partnership Project; Technical Specification Group Services and Systems Aspects; Security; Lawful Interception (LI) Implementation Guidance (Release 18)", no. V0.0.16, 25 January 2023 (2023-01-25), pages 1 - 226, XP052235404, Retrieved from the Internet <URL:https://ftp.3gpp.org/Specs/archive/33_series/33.929/33929-00g.zip S3i230105_TR33.929V0.0.16.docx> [retrieved on 20230125]
- "3rd Generation Partnership Project; Technical Specification Group Services and System Aspects; 3G security; Lawful interception architecture and functions (Release 17)", vol. SA WG3, no. V17.0.0, 31 March 2022 (2022-03-31), pages 1 - 404, XP052145508, Retrieved from the Internet <URL:https://ftp.3gpp.org/Specs/archive/33_series/33.107/33107-h00.zip 33107-h00.docx> [retrieved on 20220331]
- "3rd Generation Partnership Project; Technical Specification Group Services and System Aspects; 5G System (5GS) Location Services (LCS); Stage 2 (Release 18)", no. V18.0.0, 21 December 2022 (2022-12-21), pages 1 - 121, XP052234732, Retrieved from the Internet <URL:https://ftp.3gpp.org/Specs/archive/23_series/23.273/23273-i00.zip 23273-i00.docx> [retrieved on 20221221]

## Description

### TECHNICAL FIELD

The invention relates to a Lawful Interception Mirror Management System State Function (LMISF) device for lawful interception and data retention in a visited communications network for one or more inbound roaming User Equipments (UEs), a Lawful Interception Gateway Mobile Location Centre (LI-GMLC) device in a visited communications network for one or more inbound roaming UEs, an Identity Caching Function (ICF) device in a visited communications network for one or more inbound roaming UEs, and a Lawful Interception Gateway Mobile Location Centre (LI-GMLC) device in a visited communications network for one or more inbound roaming UEs, corresponding methods, corresponding computer programs, and a computer readable storage medium.

### BACKGROUND

Law enforcement agencies (LEAs) use location of subject for investigation worldwide. If the individual owns a user equipment, UE, usually the location of the UE is considered to be connected to the location of the individual.

The UE of the individual may be connected to its home communication network or to a visited communications network. In this latter case, the UE is called an inbound roaming UE in the visited communications network. The LEA would like to be able to locate an individual also when its UE is connected to the visiting communicating network.

Positioning of the individual can be done by locating the inbound rooming UE.

A Gateway Mobile Location Centre (GMLC), in the visited communications network, is dedicated to LI. The GMLC dedicated to LI is called LI-GMLC. The LI administrative and management system function (ADMF) queries the LI-GMLC for retrieving a positioning information (e.g., Latitude, Longitude) for the inbound roaming UE. The ADMF obtains the positioning information, and delivers the positioning information to the requesting LEA by means of delivery function 2 (DF2) according to ETSI TS 133 107 V6.5.0.

### SUMMARY

An object of the invention is to reduce network load while enabling location request of an inbound roaming UE.

According to a first aspect of the invention, a Lawful Interception Mirror Management System State Function (LMISF) device for lawful interception and data retention in a visited communications network for one or more inbound roaming User Equipments (UEs) is provided. The LMISF device is configured to receive signalling related to the one or more inbound roaming UEs. The signalling comprises a Mobile Station International Subscriber Directory Number (MSISDN) and an International Mobile Subscriber Identity (IMSI) corresponding to each of the one or more inbound roaming UEs, and a serving Mobility Management Entity (MME) identifier for each of the one or more inbound roaming UEs. The LMISF device is configured to store an association among the MSISDN, the corresponding IMSI, and the serving MME identifier for each of the one or more inbound roaming UEs. The LMISF device is configured to receive, from a Lawful Interception Gateway Mobile Location Centre (LI-GMLC) device, a query message containing a MSISDN of a target inbound roaming UE and requesting an associated IMSI and a serving MME identifier corresponding to the MSISDN. The LMISF device is configured to transmit, to the LI-GMLC device, a response message comprising the associated IMSI and the serving MME identifier corresponding to the MSISDN for the target inbound roaming UE, if the MSISDN of the target inbound roaming UE is stored in the LMISF device.

According to an embodiment of the first aspect, the signalling is received during a registration procedure to Voice over Long Term Evolution (VoLTE) service of each of the one or more inbound roamer.

According to an embodiment of the first aspect, the signalling is a modified Session Initiation Protocol (SIP) REGISTRATION message.

According to an embodiment of the first aspect, the signalling corresponds to messages over a reference point Xia.

According to an embodiment of the first aspect, the serving MME identifier for each of the one or more inbound roaming UEs is obtained during the registration procedure to VoLTE service of each of the one or more inbound roaming UEs.

According to an embodiment of the first aspect, the LMISF device is configured to communicate with the LI-GMLC device over a SLh interface.

According to an embodiment of the first aspect, the query message is received over the SLh interface.

According to an embodiment of the first aspect, the query message is a Send Routing Information for LCS (SLh-LCS-SRI) message.

According to an embodiment of the first aspect, the response message is transmitted over the SLh interface.

According to an embodiment of the first aspect, the response message is a Send Routing Information for LCS (SLh-LCS-SRI)Resp message.

According to a second aspect of the invention, a Lawful Interception Gateway Mobile Location Centre (LI-GMLC) device in a visited communications network for one or more inbound roaming User Equipments (UEs) is provided. The LI-GMLC device is configured to receive, from a Lawful Interception Management System (LI-MS) device a first positioning request for a target inbound roaming user equipment (UE), the first positioning request comprises a Mobile Station International Subscriber Directory Number, MSISDN, corresponding to the inbound roaming UE. The LI-GMLC device is configured to transmit, to a Lawful Interception Mirror Management System State Function (LMISF) device, a query message for obtaining an IMSI associated to the MSISDN corresponding to the target inbound roaming UE. The LI-GMLC device is configured to receive, from the LMISF device, a response message comprising the IMSI corresponding to the target inbound roaming UE, and a serving MME identifier corresponding to the target inbound roaming UE. The LI-GMLC device is configured to transmit, to an MME device associated to the serving MME identifier, a second positioning request, the second positioning request comprising the IMSI. The LI-GMLC device is configured to receive, from the MME device, position information corresponding to the target inbound roaming UE. The LI-GMLC device is configured to transmit, to the LI-MS, the position information corresponding to the target inbound roaming UE.

According to an embodiment of the second aspect, the LI-GMLC device is configured to communicate with the LMISF device over a SLh interface.

According to an embodiment of the second aspect, the query message (420) is transmitted over the SLh interface.

According to an embodiment of the second aspect, the query message is a Send Routing Information for LCS (SLh-LCS-SRI) message.

According to an embodiment of the second aspect, the response message is received over the SLh interface.

According to an embodiment of the second aspect, the response message is a Send Routing Information for LCS (SLh-LCS-SRI)Resp message.

According to a third aspect of the invention, a method performed by a Lawful Interception Mirror Management System State Function (LMISF) device for lawful interception and data retention in a visited communications network for one or more inbound roaming User Equipments (UEs) is provided. The method comprises receiving signalling related to the one or more inbound roaming UEs. The signalling comprises a Mobile Station International Subscriber Directory Number (MSISDN), and an International Mobile Subscriber Identity (IMSI) corresponding to each of the one or more inbound roaming UEs, and a serving Mobility Management Entity (MME) identifier for each of the one or more inbound roaming UEs. The method comprises storing an association among the MSISDN, the corresponding IMSI, and the serving MME identifier for each of the one or more inbound roaming UEs. The method comprises receiving, from a Lawful Interception Gateway Mobile Location Centre (LI-GMLC) device a query message containing a MSISDN of a target inbound roaming UE and requesting an associated IMSI and MME identifier corresponding to the MSISDN. The method comprises transmitting, to the LI-GMLC device, a response message comprising the associated IMSI and the serving MME identifier corresponding to the MSISDN for the target inbound roaming UE, if the MSISDN of the target inbound roaming UE is stored in the LMISF device.

According to an embodiment of the third aspect, the signalling is received during a registration procedure to VoLTE service of each of the one or more inbound roamer UEs.

According to an embodiment of the third aspect, the signalling is a modified SIP REGISTRATION message.

According to an embodiment of the third aspect, the signalling corresponds to messages over an Xia interface.

According to an embodiment of the third aspect, the serving MME identifier for the each of the one or more inbound roaming UEs is obtained during the registration procedure to VoLTE service of each of the one or more inbound roaming UEs.

According to an embodiment of the third aspect, the LMISF device is configured to communicate with the LI-GMLC device over a SLh interface.

According to an embodiment of the third aspect, the query message is received over the SLh interface.

According to an embodiment of the third aspect, the query message is a Send Routing Information for LCS (SLh-LCS-SRI) message.

According to an embodiment of the third aspect, the response message (430) is transmitted over the SLh interface.

According to an embodiment of the third aspect, the query message is a Send Routing Information for LCS (SLh-LCS-SRI)Resp message.

According to a fourth aspect of the invention, a method performed by a Lawful Interception Gateway Mobile Location Centre (LI-GMLC) device in a visited communications network for one or more inbound roaming User Equipments (UEs) is provided. The method comprises receiving, from a Lawful Interception Management System (LI-MS) device a first positioning request for a target inbound roaming user equipment (UE) the first positioning request comprises a Mobile Station International Subscriber Directory Number (MSISDN) corresponding to the inbound roaming UE. The method comprises transmitting, to a Lawful Interception Mirror Management System State Function (LMISF) device, a query message for obtaining an IMSI associated to the MSISDN corresponding to the target inbound roaming UE. The method comprises receiving, from the LMISF device, a response message comprising the IMSI corresponding to the target inbound roaming UE, and a serving MME identifier corresponding to the target inbound roaming UE. The method comprises transmitting, to an Mobility Management Entity (MME) device associated to the serving MME identifier, a second positioning request, the second positioning request comprises the IMSI. The method comprises receiving, from the MME device, position information corresponding to the target inbound roaming UE. The method comprises transmitting, to the LI-MS device, the position information corresponding to the target inbound roaming UE.

According to an embodiment of the fourth aspect, the LI-GMLC device is configured to communicate with the LMISF device over a SLh interface.

According to an embodiment of the fourth aspect, the query message is received over the SLh interface.

According to an embodiment of the fourth aspect, the query message is a Send Routing Information for LCS (SLh-LCS-SRI) message.

According to an embodiment of the fourth aspect, the response message is transmitted over the SLh interface.

According to an embodiment of the fourth aspect, the response message is a Send Routing Information for LCS (SLh-LCS-SRI)Resp message.

According to a fifth aspect of the invention, a computer program is provided. The computer program comprises instructions, which when executed on a Lawful Interception Mirror Management System State Function (LMISF) device for lawful interception and data retention in a visited communications network for one or more inbound roaming User Equipments (UEs), causes the LIMFS device to receive signalling related to the one or more inbound roaming UEs. The signalling comprises a Mobile Station International Subscriber Directory Number (MSISDN) and an International Mobile Subscriber Identity (IMSI) corresponding to each of the one or more inbound roaming UEs, and a serving Mobility Management Entity (MME) identifier for each of the one or more inbound roaming UEs. The instructions, when executed, cause the LMISF device to store an association among the MSISDN, the corresponding IMSI, and the serving MME identifier for each of the one or more inbound roaming UEs. The instructions, when executed, causes the LMISF device to receive, from a Lawful Interception Gateway Mobile Location Centre (LI-GMLC) device, a query message containing a MSISDN of a target inbound roaming UE and requesting an associated IMSI and MME identifier corresponding to the MSISDN. The instructions, when executed, causes the LMISF device to transmit, to the LI-GMLC device, a response message comprising the associated IMSI and the serving MME identifier corresponding to the MSISDN for the target inbound roaming UE, if the MSISDN of the target inbound roaming UE is stored in the LMISF device.

According to an embodiment of the fifth aspect, the signalling is received during a registration procedure to VoLTE service of each of the one or more inbound roamer UEs.

According to an embodiment of the fifth aspect, the signalling is a modified SIP REGISTRATION message.

According to an embodiment of the fifth aspect, the signalling corresponds to messages over an Xia interface.

According to an embodiment of the fifth aspect, the serving MME identifier for the inbound roaming UE is obtained during the registration procedure to VoLTE service of each of the one or more inbound roaming UEs.

According to an embodiment of the fifth aspect, the LMISF device is configured to communicate with the LI-GMLC device over a SLh interface.

According to an embodiment of the fifth aspect, the query message is received over the SLh interface.

According to an embodiment of the fifth aspect, the query message is a Send Routing Information for LCS (SLh-LCS-SRI) message.

According to an embodiment of the fifth aspect, the response message is transmitted over the SLh interface.

According to an embodiment of the fifth aspect, the response message is a Send Routing Information for LCS (SLh-LCS-SRI)Resp message.

According to a sixth aspect of the invention, a computer program is provided. The computer program comprises instructions, which when executed by a Lawful Interception Gateway Mobile Location Centre (LI-GMLC) device in a visited communications network for one or more inbound roaming User Equipments (UEs) causes the LI-GMLC device to receive, from a Lawful Interception Management System (LI-MS) device a first positioning request for a target inbound roaming user equipment (UE) the first positioning request comprising a Mobile Station International Subscriber Directory Number, MSISDN, corresponding to the inbound roaming UE. The instructions, which when executed, causes the LI-GMLC device to transmit, to a Lawful Interception Mirror Management System State Function (LMISF) device, a query message for obtaining an IMSI associated to the MSISDN corresponding to the target inbound roaming UE. The instructions, which when executed, causes the LI-GMLC device to receive, from the LMISF device, a response message comprising the IMSI corresponding to the target inbound roaming UE, and a serving MME identifier corresponding to the target inbound roaming UE. The instructions, which when executed, causes the LI-GMLC device to transmit, to a Mobility Management Entity (MME) device associated to the serving MME identifier, a second positioning request, the second positioning request comprising the IMSI. The instructions, which when executed, causes the LI-GMLC device to receive, from the MME device, position information corresponding to the target inbound roaming UE. The instructions, which when executed, causes the LI-GMLC device to transmit, to the LI-MS device, the position information corresponding to the target inbound roaming UE.

According to an embodiment of the sixth aspect, the LI-GMLC device is configured to communicate with the LMISF device over a SLh interface.

According to an embodiment of the sixth aspect, the query message is received over the SLh interface.

According to an embodiment of the sixth aspect, the query message is a Send Routing Information for LCS (SLh-LCS-SRI) message.

According to an embodiment of the sixth aspect, the response message is transmitted over the SLh interface.

According to an embodiment of the sixth aspect, the response message is a Send Routing Information for LCS (SLh-LCS-SRI)Resp message.

According to a seventh aspect of the invention, an Identity Caching Function (ICF) device for lawful interception and data retention in a visited communications network for one or more inbound roaming User Equipments (UEs), is provided. The ICF device is configured to receive signalling related to one or more inbound roaming UEs. The signalling comprises a Subscription Permanent Identifier (SUPI) and a Generic Public Subscription Identifier (GPSI) corresponding to each of the one or more inbound roaming UEs, and a serving Access Mobility and Management Function (AMF) identifier for each of the one or more inbound roaming UEs. The ICF device is configured to store an association among the GPSI, the corresponding SUPI, and the serving AMF identifier for each of the one or more inbound roaming UEs. The ICF device is configured to receive, from a Lawful Interception Gateway Mobile Location Centre (LI-GMLC) device, a query message containing a GPSI of a target inbound roaming UE and requesting an associated SUPI and AMF identifier corresponding to the GPSI. The ICF device is configured to transmit, to the LI-GMLC, a response message comprising the associated SUPI, and the serving AMF identifier corresponding to the GPSI for the target inbound roaming UE.

According to an embodiment of the seventh aspect, the ICF device is configured to communicate with the LI-GMLC device (1610) over a NLh interface.

According to an embodiment of the seventh aspect, the query message is received over the NLh interface.

According to an embodiment of the seventh aspect, the query message is a UDM_UECM_Get message.

According to an embodiment of the seventh aspect, the response message is transmitted over the NLh interface.

According to an embodiment of the seventh aspect, the response message is a UDM_UECM_Response message.

According to an eighth aspect of the invention, a Lawful Interception Gateway Mobile Location Centre (LI-GMLC) device in a visited communications network for one or more inbound roaming User Equipments (UEs), is provided. The LI-GMLC device is configured to receive, from a Lawful Interception Management System (LI-MS) device a first positioning request for a target inbound roaming UE, the first positioning request comprises a Generic Public Subscription Identifier (GPSI) corresponding to the target inbound roaming UE. The LI-GMLC device is configured to transmit, to an Identity Caching Function (ICF) device, a query message for obtaining a Subscription Permanent Identifier, SUPI associated to the GPSI corresponding to the target inbound roaming UE. The LI-GMLC device is configured to receive, from the ICF device, a response message comprising the SUPI corresponding to the target inbound roaming UE, and a serving AMF identifier corresponding to the target inbound roamer.

The LI-GMLC device is configured to transmit, to an Access Mobility Management Function (AMF) device associated to the serving AMF identifier, a second positioning request, the second positioning request comprises the SUPI. The LI-GMLC device is configured to receive, from the AMF device, position information corresponding to the target inbound roaming UE. The LI-GMLC device is configured to transmit, to the LI-MS device, the position information corresponding to the target inbound roaming UE.

According to an embodiment of the eighth aspect, the LI-GMLC device is configured to communicate with the ICF device over a SLh interface.

According to an embodiment of the eighth aspect, the query message is transmitted over the NLh interface.

According to an embodiment of the eighth aspect, the query message is a UDM_UECM_Get message.

According to an embodiment of the eighth aspect, the response message is received over the NLh interface.

According to an embodiment of the eighth aspect, the response message is a UDM_UECM_Response message.

According to a ninth aspect of the invention, a method performed by an Identity Caching Function (ICF) device for lawful interception and data retention in a visited communications network for one or more inbound roaming User Equipments (UEs), is provided. The method comprises receiving signalling related to one or more inbound roaming UEs. The signalling comprises a Subscription Permanent Identifier (SUPI) and a Generic Public Subscription Identifier (GPSI) corresponding to each of the one or more inbound roaming UEs, and a serving Access Mobility and Management Function (AMF) identifier for each of the one or more inbound roaming UEs. The method comprises storing an association among the GPSI, the corresponding SUPI, and the serving g AMF identifier for each of the one or more inbound roaming UEs. The method comprises receiving, from a Lawful Interception Gateway Mobile Location Centre (LI-GMLC) device, a query message containing a GPSI of a target inbound roaming UE and requesting an associated SUPI and AMF identifier corresponding to the GPSI. The method comprises transmitting, to the LI-GMLC device, a response message comprising the associated SUPI, and the serving AMF identifier corresponding to the GPSI for the target inbound roaming UE.

According to an embodiment of the ninth aspect, the ICF device is configured to communicate with the LI-GMLC device over a NLh interface.

According to an embodiment of the ninth aspect, the query message is received over the NLh interface.

According to an embodiment of the ninth aspect, the query message is a UDM_UECM_Get message.

According to an embodiment of the ninth aspect, the response message is transmitted over the NLh interface.

According to an embodiment of the ninth aspect, the response message is a UDM_UECM_Response message.

According to a tenth aspect of the invention, a method, performed by a Lawful Interception Gateway Mobile Location Centre (LI-GMLC) device in a visited communications network for one or more inbound roaming User Equipments (UEs), is provided. The method comprises receiving, from a Lawful Interception Management System (LI-MS) device, a first positioning request for a target inbound roaming UE, the first positioning request comprising a Generic Public Subscription Identifier (GPSI) corresponding to the target inbound roaming UE. The method comprises transmitting, to an Identity Caching Function (ICF) device, a query message for obtaining a Subscription Permanent Identifier (SUPI) associated to the GPSI corresponding to the target inbound roaming UE. The method comprises receiving, from the ICF device, a response message comprising the SUPI corresponding to the target inbound roaming UE, and a serving AMF identifier corresponding to the target inbound roamer. The method comprises transmitting, to an Access Mobility and Management Function (AMF) device associated to the serving AMF identifier, a second positioning request, the second positioning request comprises the SUPI. The method comprises receiving, from the AMF device, position information corresponding to the target inbound roaming UE. The method comprises transmitting, to the LI-MS device, the position information corresponding to the target inbound roaming UE.

According to an embodiment of the tenth aspect, the LI-GMLC device is configured to communicate with the ICF device (1510) over a NLh interface.

According to an embodiment of the tenth aspect, the query message is received over the NLh interface.

According to an embodiment of the tenth aspect, the query message is a UDM_UECM_Get message.

According to an embodiment of the tenth aspect, the response message is transmitted over the NLh interface.

According to an embodiment of the tenth aspect, the response message is a UDM_UECM_Response message.

According to an eleventh aspect of the invention, a computer program is provided. The computer program comprises instructions, which when executed by an Identity Caching Function (ICF) device for lawful interception and data retention in a visited communications network for one or more inbound roaming User Equipments (UEs), causes the ICF device to receive signalling related to one or more inbound roaming UEs, the signalling comprises a Subscription Permanent Identifier (SUPI), and a Generic Public Subscription Identifier (GPSI) corresponding to each of the one or more inbound roaming UEs, and a serving Access Mobility and Management Function (AMF) identifier for each of the one or more inbound roaming UEs. The instructions, when executed, cause the ICF device to store an association among the GPSI, the corresponding SUPI, and the serving AMF identifier for each of the one or more inbound roaming UEs. The instructions, when executed, cause the ICF device to receive, from a Lawful Interception Gateway Mobile Location Centre (LI-GMLC) device, a query message containing a GPSI of a target inbound roaming UE and requesting an associated SUPI and AMF identifier corresponding to the GPSI. The instructions, when executed, cause the ICF device to transmit, to the LI-GMLC device, a response message comprising the associated SUPI, and the serving AMF identifier corresponding to the GPSI for the target inbound roaming UE.

According to an embodiment of the eleventh aspect, the ICF device is configured to communicate with the LI-GMLC device over a NLh interface.

According to an embodiment of the eleventh aspect, the query message is received over the NLh interface.

According to an embodiment of the eleventh aspect, the query message is a UDM_UECM_Get message.

According to an embodiment of the eleventh aspect, the response message is transmitted over the NLh interface.

According to an embodiment of the eleventh aspect, the response message is a UDM_UECM_Response message.

According to a twelfth aspect of the invention, a computer program is provided. The computer program comprises instructions, which when executed by a Lawful Interception Gateway Mobile Location Centre (LI-GMLC) device in a visited communications network for one or more inbound roaming User Equipments (UEs), cause the LI-GMLC device to receive, from a Lawful Interception Management System (LI-MS) device a first positioning request for a target inbound roaming UE, the first positioning request comprises a Generic Public Subscription Identifier (GPSI) corresponding to the target inbound roaming UE. The instructions, when executed, cause the LI-GMLC device to transmit, to an Identity Caching Function (ICF) device, a query message for obtaining a Subscription Permanent Identifier (SUPI) associated to the GPSI corresponding to the target inbound roaming UE. The instructions, when executed, cause the LI-GMLC device to receive, from the ICF device, a response message comprising the SUPI corresponding to the target inbound roaming UE, and a serving AMF identifier corresponding to the target inbound roamer. The instructions, when executed, cause the LI-GMLC device to transmit, to an Access Mobility Management Function (AMF) device associated to the serving AMF identifier, a second positioning request, the second positioning request comprising the SUPI. The instructions, when executed, cause the LI-GMLC device to receive, from the AMF device, position information corresponding to the target inbound roaming UE. The instructions, when executed, cause the LI-GMLC device to transmit, to the LI-MS device, the position information corresponding to the target inbound roaming UE.

According to an embodiment of the twelfth aspect, the LI-GMLC device is configured to communicate with the ICF device (1510) over a NLh interface.

According to an embodiment of the twelfth aspect, the query message is received over the NLh interface.

According to an embodiment of the twelfth aspect, the query message is a UDM_UECM_Get message.

According to an embodiment of the twelfth aspect, the response message is transmitted over the NLh interface.

According to an embodiment of the twelfth aspect, the query message is a UDM_UECM_Response message.

According to a thirteenth aspect of the invention, a computer readable storage medium is provided. The computer readable storage medium comprises a computer program according to any one or more of the embodiments of the fifth aspect, the sixth aspect, the eleventh aspect, and/or the twelfth aspect of the invention.

The invention may have one or more of the following advantages.

An advantage of the invention is enabling new network functions to retrieve identification information for lawful interception of an inbound roaming UE to achieve accurate positioning of the inbound roaming UE.

An advantage of the invention is reduction of network impact (e.g., load) for positioning request of inbound roaming UE in a visited communications network for lawful interception.

An advantage of the invention is utilizing existing interfaces, hence already existing communication interfaces are not impacted.

Further objectives of, features of, and advantages with, the invention will become apparent when studying the following detailed disclosure, the drawings, and the appended claims. Those skilled in the art realize that different features of the invention can be combined to create embodiments other than those described in the following.

### BRIEF DESCRIPTION OF THE DRAWINGS

The above, as well as additional objects, features and advantages of the invention, will be better understood through the following illustrative and non-limiting detailed description of embodiments of the invention, with reference to the appended drawings, in which:
Figure 1 shows a method performed by a LMISF device.
Figure 2 shows an embodiment of a visited communications network for one or more inbound roaming UEs.
Figure 3 shows an embodiment of the method performed by the LMISF device.
Figure 4 shows an embodiment of the method performed by the LMISF device.
Figure 5 shows a method performed by a LI-GMLC device.
Figure 6 shows an embodiment of the method performed by the LI-GMLC device.
Figure 7 shows an embodiment of the method performed by the LI-GMLC device.
Figure 8 shows an illustrative example of messages exchanged between a LI-MS device, a LI-GMLC device, a MME device, a LMISF device, and a BBIFF device.
Figure 9 show a block diagram of a LMISF device.
Figure 10 shows a block diagram of a LI-GMLC device.
Figure 11 shows a block diagram of a LMISF device.
Figure 12 shows a block diagram of a LI-GMLC device.
Figure 13 shows a method performed by a ICF device.
Figure 14 shows an embodiment of a visited communications network for one or more inbound roaming UEs.
Figure 15 shows an embodiment of the method performed by the ICF device.
Figure 16 shows an embodiment of the method performed by the ICF device.
Figure 17 shows a method performed by a LI-GMLC device.
Figure 18 shows an embodiment of the method performed by the LI-GMLC device.
Figure 19 shows an embodiment of the method performed by the LI-GMLC device.
Figure 20 shows an illustrative example of message exchanged between a LI-MS device, a LI-GMLC device, an AMF device, a ICF device, and an IEF device.
Figure 21 shows a block diagram of an ICF device.
Figure 22 shows a block diagram of an LI-GMLC device.
Figure 23 shows a block diagram of an ICF device.
Figure 24 shows a block diagram of an LI-GMLC device.

All the figures are schematic, and generally only show parts which are necessary in order to elucidate the invention, wherein other parts may be omitted or merely suggested.

### DETAILED DESCRIPTION

The invention will now be described more fully herein with reference to the accompanying drawings, in which certain embodiments are shown. The invention may, however, be embodied in many different forms and should not be construed as limited to the embodiments set forth herein. Rather, these embodiments are provided by way of example so that this disclosure will be thorough and complete, and will fully convey the scope of the invention to those skilled in the art.

Lawful interception (LI) refers to facilities in communications network that allow law enforcement agencies (LEA) with court orders to intercept signalling and data from a UE. Through LI, it is possible to locate an individual. If the individual owns a user equipment, UE, usually the location of the UE is considered to be connected to the location of the individual. Thus, locating the individual is performed through the location of the individual's user equipment (UE). The UE (e.g. subscription identifier) that the LEA has ordered to intercept is the target UE. The target UE refers to the individual's UE. Almost all countries have implemented LI capability requirements using LI requirements and standards developed by the European Telecommunications Standards Institute (ETSI), and/or the Third Generation Partnership Project (3GPP).

The invention disclosed herein may be used for enabling location request for an inbound roaming UE in a visited communications network for the inbound roaming UE. In particular, the invention allows to enable location request for the inbound roaming UE by storing an association of an identifier of a UE associated to the inbound roaming UE, an identifier of a UE plan subscriber corresponding to the inbound roaming UE, and a serving management entity identifier associated to the inbound roaming UE. Thus, the invention enables accurate location request of the inbound roaming UE in the visited communications network based on the identifier of the UE plan subscriber corresponding to the inbound roaming UE.

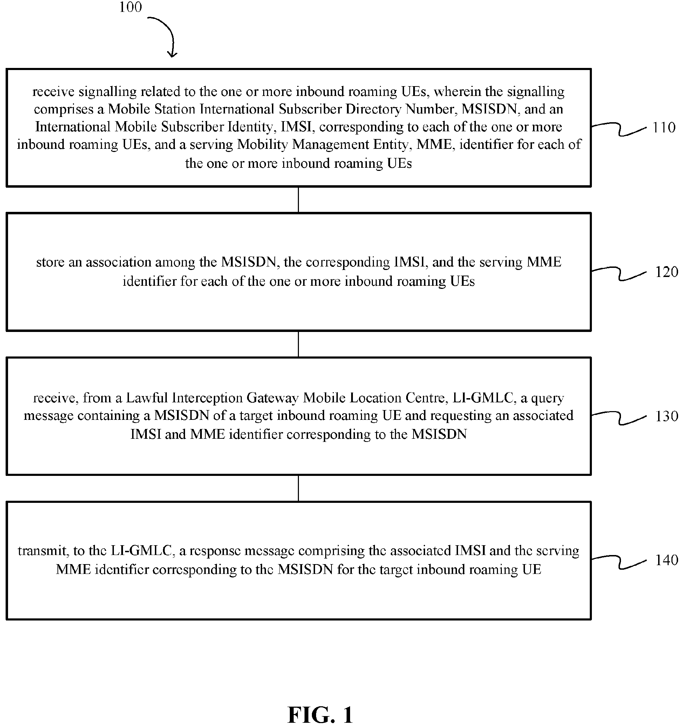

In **Figure 1****,** a flowchart depicting an embodiment of a method 100 is provided. The method 100 is performed by a LI Mirror IMS State Function (LMISF) device 310 for lawful interception and data retention in a visited communications network 220 for the one or more inbound roaming UEs 210, 215 (see Figure 160 detailed below). The LMISF device 310 may host a LMISF software allowing to perform functionality of a LMISF.

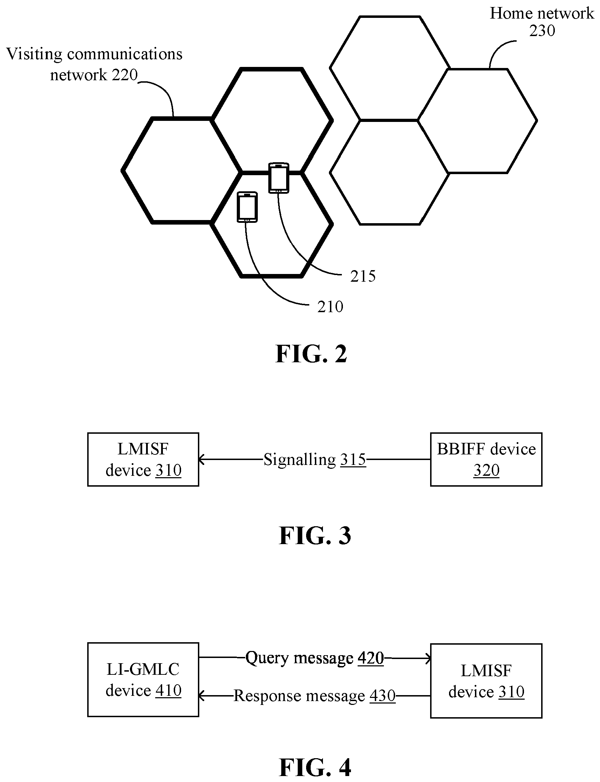

In **Figure 2****,** an embodiment of the visited communications network 220 for the one or more inbound roaming UEs 210, 215 is illustrated. The one or more inbound roaming UEs 210, 215 (in figure 2 only two UEs are depicted, however the number of UEs is arbitrary and can be any number equal or bigger than 1) may be a device capable, configured, arranged and/or operable to communicate wirelessly with network nodes and/or other wireless devices. Communicating wirelessly may involve transmitting and/or receiving wireless signals using electromagnetic waves, radio waves, infrared waves, and/or other types of signals suitable for conveying information through air. In some embodiments, the one or more inbound roaming UEs 210, 215 may be configured to transmit and/or receive information without direct human interaction. For instance, the one or more inbound roaming UEs 210, 215 may be designed to transmit information to a network on a predetermined schedule, when triggered by an internal or external event, or in response to requests from the network. Examples of one or more inbound roaming UEs 210, 215 include, but are not limited to, a smart phone, a mobile phone, a cell phone, a voice over IP (VoIP) phone, a wireless local loop phone, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE), a vehicle-mounted wireless terminal device, etc.. The one or more inbound roaming UEs 210, 215 may support device-to-device (D2D) communication, for example by implementing a 3GPP standard for sidelink communication, and may in this case be referred to as a D2D communication device. Furthermore, the one or more inbound roaming UEs 210, 215 as described above may be mobile, in which case it may also be referred to as a mobile device or a mobile terminal. The one or more inbound roaming UEs 210, 215 are able to move, and thus the one or more inbound roaming UEs 210, 215 may leave their home network 230 for the visited communications network 220. The visited communications network 220 for the one or more inbound roaming UEs 210, 215 may be a 4^{th} Generation (4G) 3^{rd} Generation Partnership Project (3GPP).

The method 100 comprises receiving 110 signalling 315 related to the one or more inbound roaming UEs 210, 215. The signalling 315 comprises a Mobile Station International Subscriber Directory Number (MSISDN) and an International Mobile Subscriber Identity (IMSI) corresponding to each of the one or more inbound roaming UEs 210, 215, and a serving Mobility Management Entity (MME) identifier for each of the one or more inbound roaming UEs 210, 215.

In **Figure 3****,** an embodiment of the step 110 of the method 100 is illustrated. The signalling 315 may be received during a registration procedure to Voice over Long Term Evolution (VoLTE) service of each of the one or more inbound roaming UEs 210, 215. Indeed, the registration procedure to VoLTE may occur if the one or more inbound roaming UEs 210, 215 decide to register for a VoLTE service. The signalling 315 may be sent by a Bearer Binding Intercept and Forward Function (BBIFF) device 320. The skilled person would understand that there is a BBIFF device 320 for each of the one or more inbound roaming UEs 210, 215. The BBIFF device 320 may host a BBIFF software allowing to perform a functionality of a BBIFF. In particular, the BBIFF device 320 performs a LI specific function introduced to support LI of voice services in the visited communications network 220. For example, the BBIFF device 320 may be part of a Serving Gateway as defined in ETSI TS 133 107, such as V14.2.0. As the Serving Gateway is responsible for handover of an inbound roaming UE, the Serving Gateway is thus monitoring and maintaining context information related to the inbound roaming UE during its idle state. In other words, the BBIFF device 320 has access to the context information related to the inbound roaming UE.

A LI specific reference point (also referred to as interface) Xia may exist between the LMISF device 310 and the BBIFF device 320. The reference point Xia is used to carry user plane information from the BBIFF device 320 to the LMISF device 310 according to 3GPP TS 33.107, such as V17.0.0. In an embodiment, the signalling 315 corresponds to messages over the reference point Xia. In an embodiment, the serving MME identifier for each of the one or more inbound roaming UEs 210, 215 is obtained during the registration procedure to VoLTE service of each of the one or more inbound roaming UEs 210, 215. In particular, according to the invention, the serving MME identifier for each of the one or more inbound roaming UEs 210, 215 is included in the signalling 315 received in step 110 of the method 100, and the signalling 315 also includes the MSISDN for each of the one or more inbound roaming UEs 210, 215, and the IMSI for each of the one or more inbound roaming UEs 210, 215. In an embodiment, the signalling 315 is a modified SIP REGISTRATION message. In particular, the modified SIP REGISTRATION message comprises MSISDN, the IMSI, and the serving MME identifier for each of the one or more inbound roaming UEs 210, 215.

The method 100 comprises storing 120 an association among the MSISDN, the corresponding IMSI, and the serving MME identifier for each of the one or more inbound roaming UEs 210, 215. For example, the storing 120 comprises having a lookup table comprising for each of the one or more inbound roaming UEs a line with an entry for the MSISDN of the inbound roaming UE, an entry for the IMSI of the inbound roaming UE, and an entry for the serving MME identifier, such as illustrated in Table 1.

**Table 1: an illustration of the look-up table.**

| | | |
|---|---|---|
| MSISDN_of_UE1 | IMSI_of_UE1 | MME identifier_of_UE1 |
| ... | ... | ... |
| MSISDN_of_UEn | IMSI_of_UEn | MME identifier_of_UEn |

In an embodiment, the lookup-table is stored in the LMISF device 310.

The method 100 comprises receiving 130 from a LI Gateway Mobile Location Centre (LI-GMLC) device 410 (shown in figure 4), a query message 420 containing a MSISDN of a target inbound roaming UE and requesting an associated IMSI and serving MME identifier corresponding to the MSISDN. The fact that an inbound roaming UE is denoted as a "target", means that such UE is in the list of targets for a LEA, e.g., a warrant has been issued for the UE. In an embodiment, the target inbound roaming UE may correspond to one or more inbound roaming UEs 210, 215, e.g., the target inbound roaming UE is one of the one or more inbound roaming UEs 210, 215. Regardless of whether the one or more inbound roaming UEs are targets or not, two scenarios are possible. In a first scenario, the one or more inbound roaming UEs 210, 215, have requested a VoLTE service, then the LMISF device 310 has received the MSISDN, the corresponding IMSI, and the serving MME identifier associated with the target inbound roaming UE in the signalling 315, as described above. In a second scenario, the one or more inbound roaming UEs 210, 215 have not requested a VoLTE service, then the LMISF device 310 does not receive the signalling 315 comprising the MSISDN, the IMSI, and the serving MME identifier relating to the target inbound roaming UE. Upon receiving 130 the query message 420, the LMISF device 310 may verify that an association among the MSISDN of the target inbound roaming UE, the corresponding IMSI and the corresponding serving MME identifier is stored. The storing is present if the target inbound roaming UE is one of the one or more inbound roaming UEs 210, 215 and in addition the one of the one or more inbound roaming UEs 210, 215 has requested a VoLTE service. In order to verify the above, for example, the LMISF device 310 may verify in the lookup table that an entry corresponding to the MSISDN of the target inbound roaming UE exist. For example, if the entry corresponding to the MSISDN of the target inbound roaming UE exists in the lookup table, then the LMISF device 310 retrieves the IMSI and the serving MME identifier corresponding to the MSISDN of the target inbound roaming UE to reply to the query message 420. Thus, upon receipt of the query message 420, the LMISF device 310 checks whether the received MSISDN belongs to its stored data, and if yes, this means that among the one or more inbound roaming UEs stored in the LMISF device 310 which have requested a VoLTE service, there is one inbound roaming UE which is a target for LI.

The method 100 comprises transmitting 140, to the LI-GMLC device 120, a response message 430 comprising the associated IMSI and the serving MME identifier corresponding to the MSISDN for the target inbound roaming UE, if the MSISDN of the target inbound roaming UE is stored in the LMISF device 310. Of course, the transmission takes place only if the data are stored in the LMISF, e.g., only if the target inbound roaming UE is one of the one or more inbound roaming UEs which have requested a VoLTE service.

In **Figure 4****,** an embodiment of the step 130 and the step 140 of the method 100 is provided. The LI-GMLC device 410 may host a LI-GMLC software allowing to perform functionality of a LI-GMLC. The LI-GMLC device 410 may perform functionality of a GMLC, such as support location-based services. The LMISF device 310 is configured to communicate with the LI-GMLC device 410 over an SLh interface. The SLh interface is according to 3GPP TS 29.173, such as v17.0.0. The LMISF device 310 implements the SLh interface according to 3GPP TS 29.173, such as v17.0.0, so as to allow reception of the query message 420 received in step 130 of the method 100. The query message 420, received in step 130 of the method 100, may be received over the SLh interface. The query message 420, received in step 130 of the method 100, may be a Send Routing Information for LCS (SLh-LCS-SRI) message.

The response message 430, transmitted in step 140 of the method 100, may be transmitted over the SLh interface. The response message 430, transmitted in step 140 of the method 100 may be a Send Routing Information for LCS (SLh-LCS-SRI)Resp message.

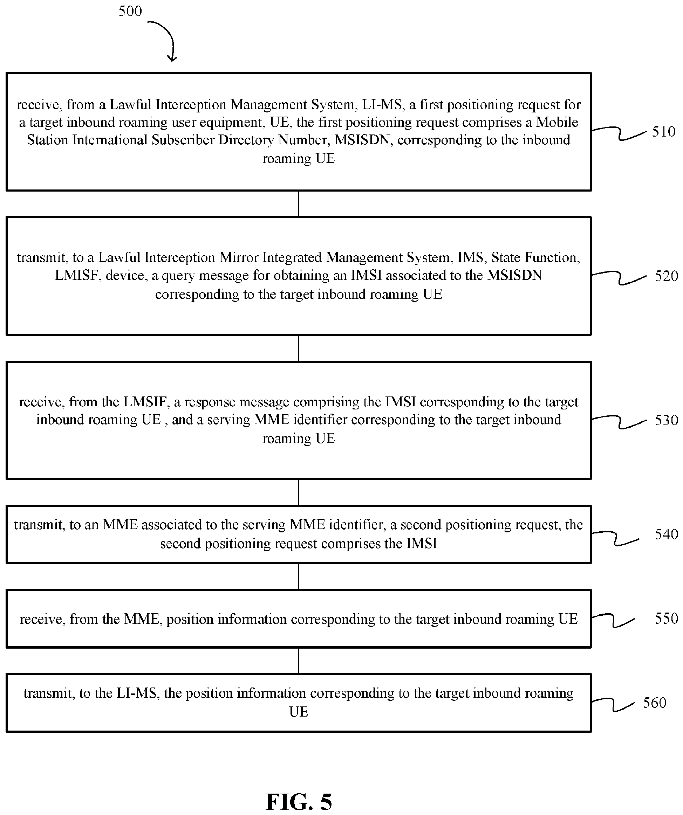

In **Figure 5****,** a flowchart depicting an embodiment of a method 500 is provided. The method 500 is performed by the LI-GMLC device 410 in the visited communications network 220 for the one or more inbound roaming UEs 210, 215.

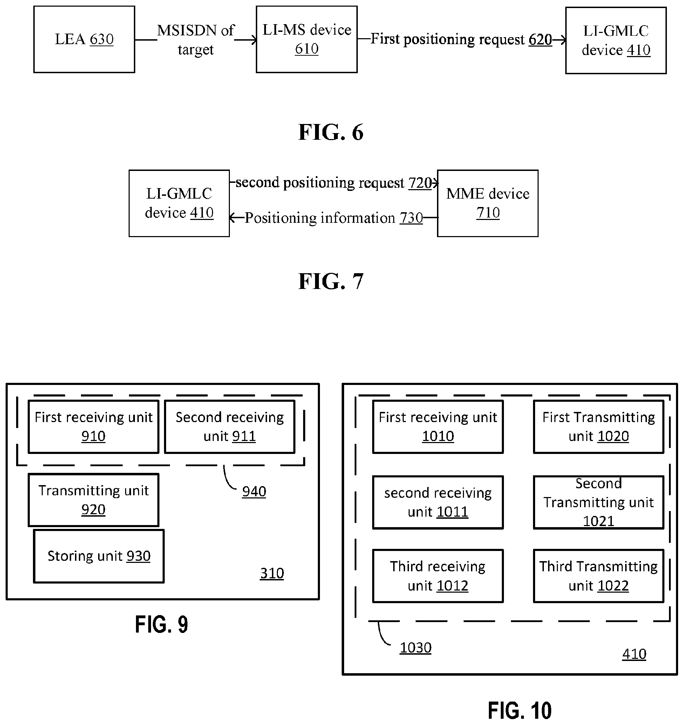

The method 500 comprises receiving 510, from a LI Management System (LI-MS) device 610, a first positioning request 620 for the target inbound roaming UE. The LI-MS device 610 may implement an LI administrative and management function (ADMF) according to 3GPP TS 33.127 V18.2.0. The LI-MS device 610 may implement a Mediation and Delivery Function 2 (MDF2) according to 3GPP TS 33.127 V18.2.0. The LI-MS device 610 may implement functionality of an LI-LCS client according to 3GPP TS 33.127 V18.2.0. The first positioning request comprises a MSISDN corresponding to the target inbound roaming UE. The first positioning request may be a Location Request according to 3GPP TS 33.127 V18.2.0. In **Figure 6****,** an embodiment of the step 510 of the method 500 is provided. The LI-MS device 610 may host a LI-MS software allowing to perform functionality of a LI-MS, such as mediation and delivery of intercepted data related to the target inbound roaming UE to a querying LEA 630. Indeed, the LI-MS device 610 may receive a positioning request for the target inbound roaming UE from the LEA. The positioning request for the target inbound roaming UE from the LEA 630 includes the MSISDN of the target inbound roaming UE. Indeed, the LEA 630 does not have access to other identification of the target inbound roaming UE than the MSISDN.

The method 500 comprises transmitting 520, to the LMISF device 310, a query message 420 (shown in Figure 4) for obtaining an IMSI associated to the MSISDN corresponding to the target inbound roaming UE. The target inbound roaming UE of method 500 corresponds to the target inbound roaming UE of method 100, as described above. The query message 420 for obtaining an IMSI associated to the MSISDN corresponding to the target inbound roaming UE, transmitted in step 520 of the method 500, corresponds to the query message received in step 130 of the method 100. In particular, the IMSI is a unique identifier of the individual owning the target inbound roaming UE as the IMSI is related to the target inbound roaming UE's plan subscriber. Thus, obtaining the IMSI associated to the MSISDN corresponding to the target inbound roaming UE allows to query for a position related to the IMSI corresponding to the target inbound roaming UE.

The method 500 comprises receiving 530, from the LMISF device 310, a response message 430 (shown in Figure 4) comprising the IMSI corresponding to the target inbound roaming UE, and a serving MME identifier corresponding to the target inbound roaming UE. The response message received in step 530 of the method 500 corresponds to the response message transmitted in step 140 of the method 100.

The method 500 comprises transmitting 540, to a Mobility Management Entity (MME) device 710 associated to the serving MME identifier, a second positioning request 720. The second positioning request 720 comprises the IMSI corresponding to the target inbound roaming UE. **In** **Figure 7****,** an embodiment of the step 540 and step 550 of the method 500 is provided. The MME device 710 may host an MME software so as to perform functionalities of a MME, such as providing mobility session management, roaming and handovers from the home network 230 to the visited communications network 220. The second positioning request 720 transmitted in step 540 of the method 500 may be a PROVIDE SUBSCRIBER LOCATION REQUEST message according to 3GPP TS 29.172. The PROVIDE SUBSCRIBER LOCATION message may include the IMSI of the target inbound roaming UE. The MME device 710 may store the IMSI corresponding to the target inbound roaming UE during the registration procedure to VoLTE service of the target inbound roaming UE. The MME device 710 may store the IMSI corresponding to the one or more inbound roaming UEs 210, 215 in a local database, or in a distributed database. For example, upon receiving the second positioning request 720, the MME device 710 may verify that the IMSI corresponding to the target inbound roaming UE is stored. In the event the IMSI corresponding to the target inbound roaming UE is stored, the MME device 710 may query an eNodeB serving the target inbound roaming UE to provide positioning information of the target inbound roaming UE.

The method 500 comprises receiving 550, from the MME device 710, position information 730 corresponding to the target inbound roaming UE. The positioning information may comprise latitude and longitude of the target inbound roaming UE. The positioning information 730 may be included in a PROVIDE SUBSCRIBER LOCATION RESPONSE message according to 3GPP TS 29.172.

The method 500 comprises transmitting 560, to the LI-MS 610, the position information corresponding to the target inbound roaming UE.

In an embodiment, the LI-GMLC device 410 is configured to communicate with the LMISF device 310 over an SLh interface. The LI-GMLC device 410 implements the SLh interface according to 3GPP TS 29.173, such as v17.0.0, so as to allow reception and transmission of the query message 420 transmitted in step 520 of the method 500, and the response message 430 received in step 530 of the method 500.

In an embodiment, the query message 420, transmitted in step 520 of the method 500, is transmitted over the SLh interface. In an embodiment, the query message 420, transmitted in step 520 of the method 500, is a Send Routing Information for LCS (SLh-LCS-SRI) message.

In an embodiment, the response message 430, received in step 530 of the method 500, is received over the SLh interface. In an embodiment, the response message 430, received in step 530 of the method 500 is a Send Routing Information for LCS (SLh-LCS-SRI)Resp message.

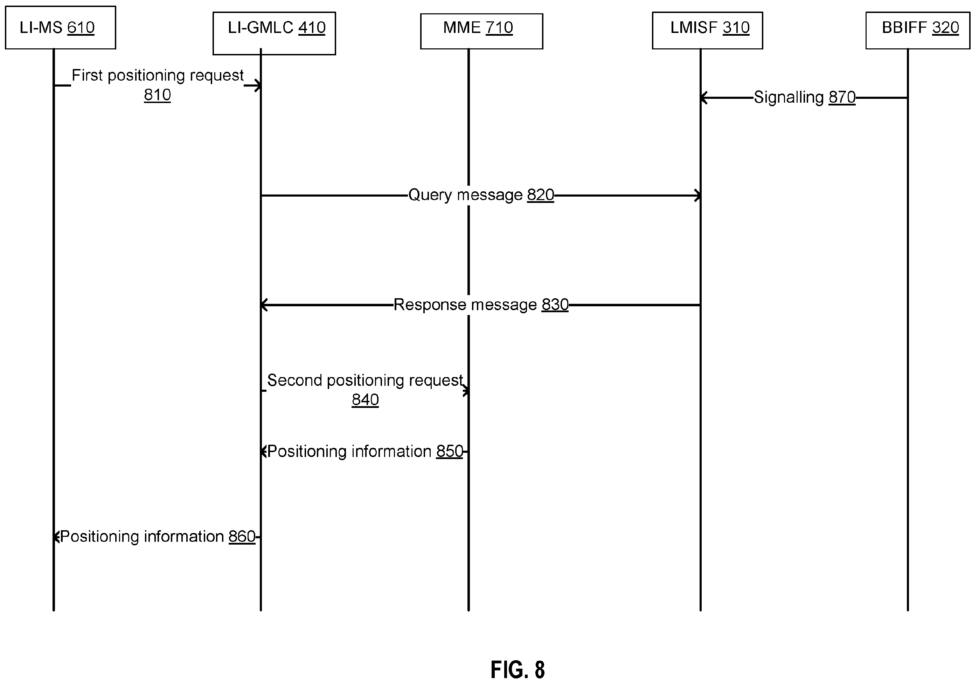

In **Figure 8****,** an illustrative example of messages exchanged between the LI-MS device 610, the LI-GMLC device 410, the MME device 710, the LMISF device 310, and the BBIFF device 320 according to embodiments is provided.

The LI-GMLC device 410 is configured to receive a first positioning request 810 from the LI-MS device 610. In an embodiment, the first positioning request 810 corresponds to the first positioning request 620 received in step 510 of the method 500.

The LI-GMLC device 410 is configured to transmit a query message 820 to the LMISF device 310. In an embodiment, the query message 820 corresponds to the query message 420 transmitted in step 520 of the method 500, and the query message 420 received in step 130 of the method 100.

The LMISF device 310 is configured to receive signalling 870. In an embodiment, the signalling 870 corresponds to the signalling 315 received in step 110 of the method 100.

The LMISF device 310 is configured to transmit a response message 830. In an embodiment, the response message 830 corresponds to the response message 430 transmitted in step 140 of the method 100, and the response message received in step 530 of the method 500.

The LI-GMLC device 410 is configured to transmit a second positioning request 840, to the MME device 710. In an embodiment, the second positioning request 840 corresponds to the second positioning request 720 transmitted in step 540 of the method 500.

The LI-GMLC device 410 is configured to receive a positioning information 850 from the MME device 710. In an embodiment, the positioning information 850 corresponds to the positioning information 730 received in step 550 of the method 500.

The LI-GMLC device 410 is configured to transmit the positioning information 860 to the LI-MS device 630. In an embodiment, the positioning information 860 corresponds to the positioning information transmitted in step 560 of the method 500.

In **Figure 9****,** a block diagram of the LMISF device 310 for LI and data retention in the visited communications network 220 of the one or more inbound roaming UEs 210, 215, is provided. The LMISF device 310 comprises a first receiving unit 910. The LMISF device 310 comprises a transmitting unit 920. The LMISF device 310 comprises a storing unit 930. The LMISF device 310 comprises a second receiving unit 911.

The first receiving unit 910 is configured to cause the LMISF device 310 to perform the step 110 of the method 100 as described above. The second receiving unit 911 is configured to cause the LMISF device 310 to perform the step 130 of the method 100 as described above.

The transmitting unit 920 is configured to cause the LMISF device 310 to perform the step 140 of the method 100 as described above.

The storing unit 930 is configured to cause the LMISF device 310 to perform the step 120 of the method 100 as described above.

In an embodiment, the receiving units 910 and 911 and the transmitting unit 920 are a same unit, such as a transceiver unit 940.

In an embodiment, the first receiving unit 910 and the second receiving unit 911 are the same unit.

The receiving units 910-911, the transmitting unit 920, and the storing unit 930, illustrated in Figure 9, may be implemented as a hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above with regards to the method 100.

In **Figure 10****,** a block diagram of the LI-GMLC device 410 in the visited communications network 220 of the one or more inbound roaming UEs 210, 215, is provided. The LI-GMLC device 410 comprises a first receiving unit 1010. The LI-GMLC device 410 comprises a second receiving unit 1011. The LI-GMLC device 410 comprises a third receiving unit 1012. The LI-GMLC device 410 comprises a first transmitting unit 1020. The LI-GMLC device 410 comprises a second transmitting unit 1021. The LI-GMLC device 410 comprises a third transmitting unit 1022.

The first receiving unit 1010 is configured to cause the LI-GMLC device 410 to perform the step 510 of the method 500 as described above. The second receiving unit 1011 is configured to cause the LI-GMLC device 410 to perform the step 530 of the method 500 as described above. The third receiving unit 1012 is configured to cause the LI-GMLC device 410 to perform the step 550 of the method 500 as described above.

The first transmitting unit 1020 is configured to cause the LI-GMLC device 410 to perform the step 520 of the method 500 as described above. The second transmitting unit 1021 is configured to cause the LI-GMLC device 410 to perform the step 540 of the method 500 as described above. The third transmitting unit 1022 is configured to cause the LI-GMLC device 410 to perform the step 560 of the method 500 as described above.

In an embodiment, the receiving units 1010-1012 and the transmitting units 1020-1022 are a same unit, such as a transceiver unit 1030.

In an embodiment, the first receiving unit 1010, the second receiving unit 1011, and the third receiving unit 1012 are the same unit.

In an embodiment, the first transmitting unit 1020, the second transmitting unit 1021, and the third transmitting unit 1022 are the same unit.

The receiving units 1010-1012, and the transmitting units 1020-1022, illustrated in Figure 10, may be implemented as a hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above with regards to the method 500.

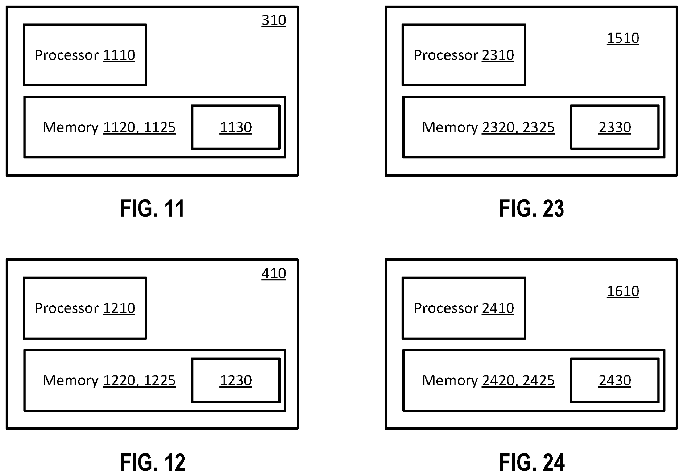

In **Figure 11****,** an embodiment of the LMISF device 310 is provided. The LMISF device 310 comprises a processor 1110, and a computer readable storage medium 1120 in the form of a memory 1125. The memory 1125 contains a computer program 1130 comprising instructions executable by the processor 1110 whereby the LMISF device 310 is operative to perform the steps of the method 100.

In **Figure 12****,** an embodiment of the LI-GMLC device 410 is provided. The LI-GMLC device 410 comprises a processor 1210, and a computer readable storage medium 1220 in the form of a memory 1225. The memory 1225 contains a computer program 1230 comprising instructions executable by the processor 1210 whereby the LI-GMLC device 410 is operative to perform the steps of the method 500.

The (non-transitory) computer readable storage media mentioned above may be an Electrically Erasable Programmable Read-Only Memory (EEPROM), a flash memory, Field Programmable Gate Array, and a hard drive.

The processor 1110 of Figure 11, and the processor 1210 of Figure 12, may be a single CPU (Central processing unit), but could also comprise two or more processing units. For example, the processor 1110 of Figure 11, and the processor 1210 of Figure 12 may include general purpose microprocessors; instructions set processors and/or related chips sets and/or special purpose microprocessors such as Application Specific Circuit (ASICs). The processor 1110 of Figure 11 and the processor 1210 of Figure 12 may also comprise board memory for caching purposes.

The computer program 1130 of Figure 11, and the computer program 1230 of Figure 12 may be carried by a computer program product connected to the processor 1110 of Figure 11, and the processor 1210 of Figure 12. The computer program products may be or comprise a non-transitory computer readable storage medium on which the computer programs 1130 of Figure 11 and the computer program 1230 of Figure 12 are stored. For example, the computer program products may be a flash memory, a Random-access memory (RAM), a Read-Only memory (ROM), or an EEPROM, and the computer programs described above could in alternative embodiments be distributed on different computer program products in the form of memories.

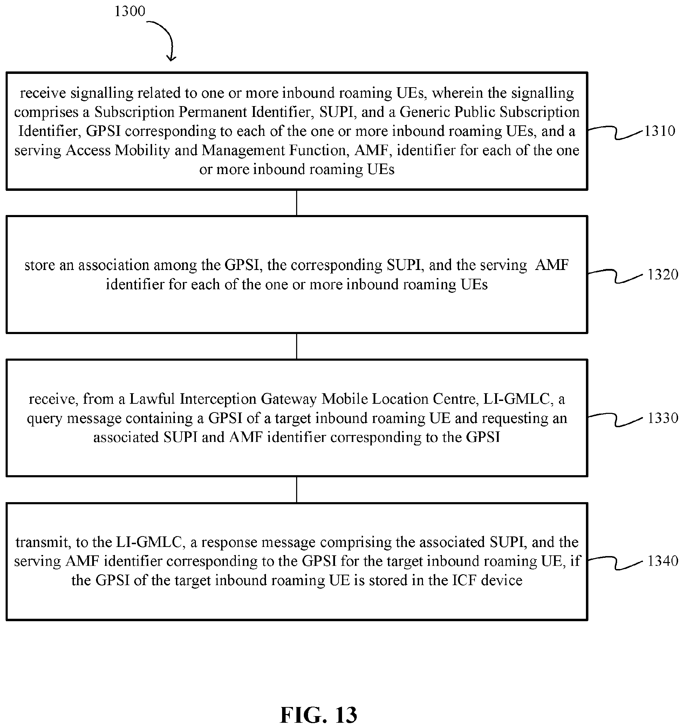

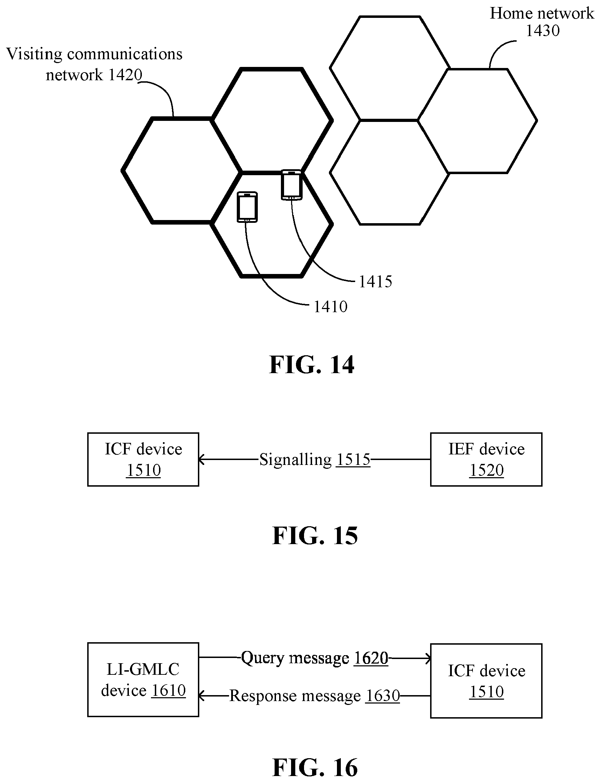

In **Figure 13****,** a flowchart depicting an embodiment of a method 1300 is provided. The method 1300 is performed by an Identity Caching Function (ICF) device 1510 for lawful interface in a visited communications network 1420 for one or more inbound roaming UEs 1410, 1415 (see Figure 14 detailed below). The ICF device 1510 may host a ICF software allowing to perform functionality of an ICF.

In **Figure 14****,** an embodiment of the visited communications network 1420 for the one or more inbound roaming UEs 1410, 1415 is illustrated. The one or more inbound roaming UEs 1410, 1415 (in Figure 14 only two UEs are depicted, however the number of UEs is arbitrary and can be any number equal or bigger than 1) may be a device capable, configured, arranged and/or operable to communicate wirelessly with network nodes and/or other wireless devices. Communicating wirelessly may involve transmitting and/or receiving wireless signals using electromagnetic waves, radio waves, infrared waves, and/or other types of signals suitable for conveying information through air. In some embodiments, the one or more inbound roaming UEs 1410, 1415 may be configured to transmit and/or receive information without direct human interaction. For instance, the one or more inbound roaming UEs 1410, 1415 may be designed to transmit information to a network on a predetermined schedule, when triggered by an internal or external event, or in response to requests from the network. Examples of one or more inbound roaming UEs 1410, 1415 include, but are not limited to, a smart phone, a mobile phone, a cell phone, a voice over IP (VoIP) phone, a wireless local loop phone, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE), a vehicle-mounted wireless terminal device, etc.. The one or more inbound roaming UEs 1410, 1415 may support device-to-device (D2D) communication, for example by implementing a 3GPP standard for sidelink communication, and may in this case be referred to as a D2D communication device. Furthermore, the one or more inbound roaming UEs 1410, 1415 as described above may be mobile, in which case it may also be referred to as a mobile device or a mobile terminal. The one or more inbound roaming UEs 1410, 1415 are able to move, and thus the one or more inbound roaming UEs 1410, 1415 may leave their home network 1430 for the visited communications network 1420. The visited communications network 1420 for the one or more inbound roaming UEs 1410, 1415 may be a 5^{th} Generation (5G) 3^{rd} Generation Partnership Project (3GPP).

The method 1300 comprises receiving 1310 signalling 1515 related to one or more inbound roaming UEs 1410, 1415. The signalling 1515 comprises a Subscription Permanent Identifier (SUPI) and a Generic Public Subscription Identifier (GPSI) corresponding to each of the one or more inbound roaming UEs 1410, 1415, and a serving Access Mobility and Management Function (AMF) identifier for each of the one or more inbound roaming UEs 1410, 1415.

In **Figure 15****,** an embodiment of the step 1310 of the method 1300 is illustrated. The signalling 1515 may be sent by an Identity Event Function (IEF) device 1520. The IEF device 1520 may host a IEF software allowing to perform a functionality of an IEF. In particular, the IEF device 1520 is responsible for observing and detecting association of between permanent identifiers (such as SUPI) and temporary identifier (such as GPSI), according to 3GPP TS 33.127, such as V16.6.0. An LI specific reference point (also referred to as interface) LI_XER exist between the ICF device 1510 and the IEF device 1520. The LI-XER reference point is used to carry identity association record according to 3GPP TS 33.108, such as v.18.2.0. Indeed, the ICF device 1510 is responsible for caching of identifier associations provided by the IEF device 1520 in identity event records received over the LI_XER reference point according to 3GPP TS 33.127, such as V16.6.0. In an embodiment, the signalling 1515 corresponds to messages over the reference point LI_XER. In an embodiment, the serving AMF identifier for each of the one or more inbound roaming UEs 1410, 1415 is obtained during a registration procedure to voice or video service in the visited communications network 1420 of each of the inbound roaming UEs 1410, 1415. In particular, according to the invention, the signalling 1515 includes the serving AMF identifier for each of the one or more inbound roaming UEs 1410, 1415, the SUPI, and the GPSI corresponding to each of the one or more inbound roaming UEs 1410, 1415. In an embodiment, the signalling 1515 is a modified IEFAssociationRecord message. In particular, the modified IEFAssociationRecord message comprises SUPI, the GPSI, and the serving AMF identifier for each of the one or more inbound roaming UEs 1410, 1415. Thus, the ICF device 1510 may keep track of the identity SUPI, SUCI, and GPSI and the serving AMF identifier for each of the one or more inbound roaming UEs 1410, 1415. The identity SUPI, SUCI, and GPSI associated to the one or more inbound roaming UEs 1410, 1415 may be stored in an internal database of the ICF device 1510. Thus, the ICF device 1510 already has information to know which GPSI associated to an inbound roaming UE corresponds to which SUPI associated to the same inbound roaming UE. Thus, the ICF device 1510 is a reference point for the LI-GMLC device 1610 for obtaining the associated SUPI corresponding to the GPSI of the target inbound roaming UE.

The method 1300 comprises storing 1320 an association among the GPSI, the corresponding SUPI, and the serving AMF identifier for each of the one or more inbound roaming UEs 1410, 1415. For example, the storing 1320 comprises having a lookup table comprising for each of the one or more inbound roaming UEs a line with an entry for the GPSI of the inbound roaming UE, an entry for the SUPI of the inbound roaming UE, and an entry for the serving AMF identifier, such as illustrated in Table 2.

**Table 2: an illustration of the look-up table.**

| | | |
|---|---|---|
| GPSI_of_UE1 | SUPI_of_UE1 | AMF identifier_of_UE1 |
| ... | ... | ... |
| GPSI_of_UEn | SUPI_of_UEn | AMF identifier_of_UEn |

In an embodiment, the lookup table is stored in the ICF device 1510.

The method 1300 comprises receiving 1330 from a Lawful Interception Gateway Mobile Location Centre (LI-GMLC) device 1610 a query message 1620 containing a GPSI of a target inbound roaming UE and requesting an associated SUPI and AMF identifier corresponding to the GPSI. The fact that an inbound roaming UE is denoted as a "target", means that such UE is in the list of targets for a LEA, e.g., a warrant has been issued for the UE. In an embodiment, the target inbound roaming UE may correspond to one or more inbound roaming UEs 1410, 1415, e.g., the target inbound roaming UE is one of the one or more inbound roaming UEs 210, 215. Upon receiving 1330 the query message 1620, the ICF device 1510 may verify that an association among the GPSI of the target inbound roaming UE, the corresponding SUPI and the corresponding AMF identifier is stored. The storing is present if the target inbound roaming UE is one of the one or more inbound roaming UEs 1410, 1415, and in addition the one of the one or more inbound roaming UEs 1410, 1415 has requested a voice or video service in the visited communications network 1420. In order to verify the above, for example, the ICF device 1510 may verify in the lookup table that an entry corresponding to the GPSI of the target inbound roaming exists. For example, if the entry corresponding to the GPSI of the target inbound roaming UE exists in the lookup table, then the ICF device 1510 retrieves the SUPI and the serving AMF identifier corresponding to the GPSI of the target inbound roaming UE to reply to the query message 1620. Thus, upon receipt of the query message 1610, the ICF device 1510 checks whether the received MSISDN belongs to its stored data, and if yes, this means that among the one or more inbound roaming UEs stored in the ICF device 1510 which have requested a voice or video service in the visited communications network 1420, there is one inbound roaming UE which is a target for LI.

The method 1300 comprises transmitting 1330, to the LI-GMLC device 1610, a response message 1630 comprising the associated SUPI, and the serving AMF identifier corresponding to the GPSI for the target inbound roaming UE, if the GPSI of the target inbound roaming UE is stored in the ICF device 1510, e.g., only if the target inbound roaming UE is one of the one or more inbound roaming UEs 1410, 1415 which have request a voice or video service in the visited communications network 1420.

In **Figure 16****,** an embodiment of the step 1330 and the step 1340 of the method 1300 is provided. The LI-GMLC device 1610 may host a LI-GMLC software allowing to perform functionality of a LI-GMLC. The LI-GMLC device 1610 may perform functionality of a GMLC, such as support location-based services. The ICF device 1510 is configured to communicate with the LI-GMLC device 1610- over an NLh interface. The NLh interface is according to 3GPP TS 23.501, such as V18.0.0. The ICF device 1510 implements the NLh interface according to 3GPP TS 23.501, such as V18.0.0, so as to allow reception of the query message 1620 received in the step 1330 of the method 1300. The query message 1620, received in step 1330 of the method 1300, may be received over the NLh interface. The query message 1620, received in step 1330 of the method 1300, may be a UDM_UECM_Get message. The response message 1630, transmitted in the step 1340 of the method 1300, may be transmitted over the NLh interface. The response message 1630, transmitted in step 1340 of the method 1300 may be a UDM_UECM_Response message.

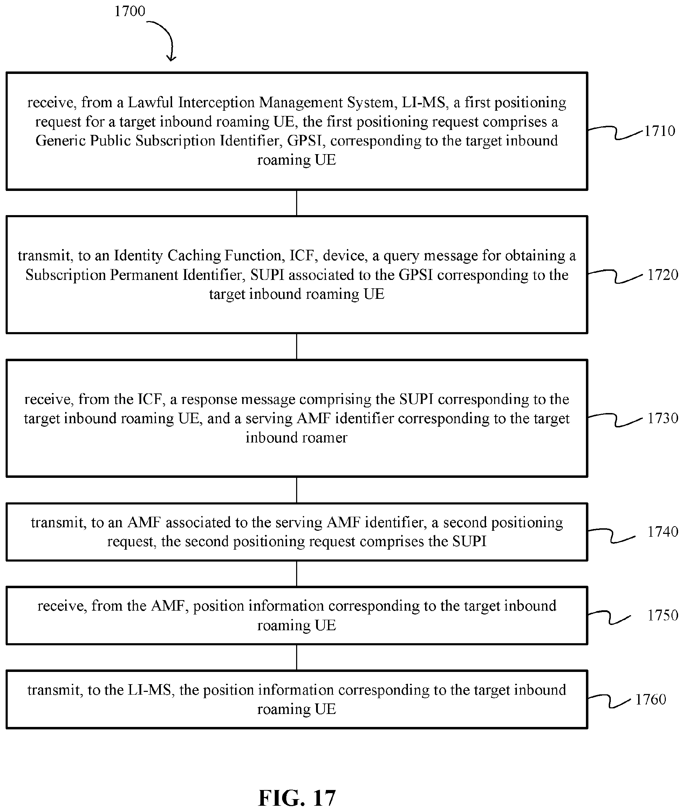

In **Figure 17****,** a flowchart depicting an embodiment of the method 1700 is provided. The method 1700 is performed by the LI-GMLC device 1610 in the visited communications network 1420 for the one or more inbound roaming UEs 1410, 1415.

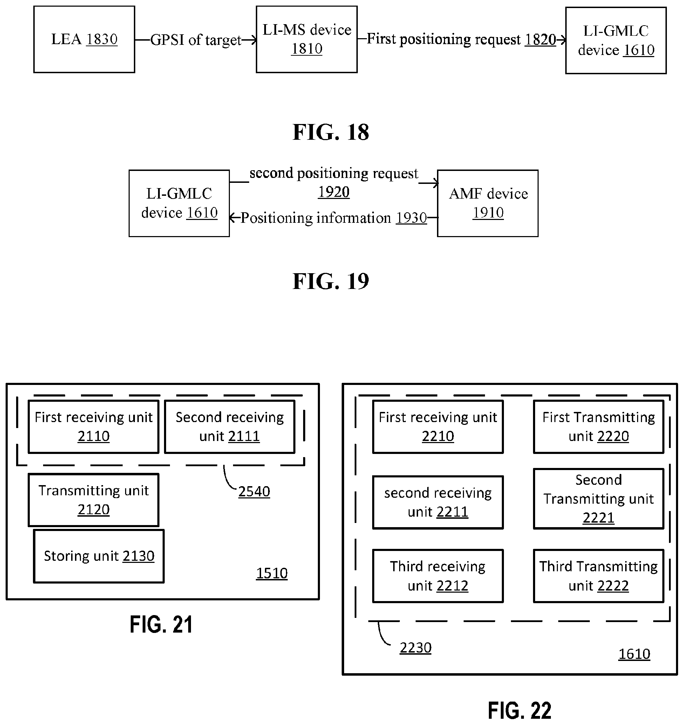

The method 1700 comprises receiving 1710, from a Lawful Interception Management System (LI-MS) device 1810 a first positioning request 1820 for the target inbound roaming UE. The LI-MS device 1810 may implement an LI administrative and management function (ADMF) according to 3GPP TS 33.127 V18.2.0. The LI-MS device 1810 may implement a Mediation and Delivery Function 2 (MDF2) according to 3GPP TS 33.127 V18.2.0. The LI-MS device 1810 may implement functionality of an LI-LCS client according to 3GPP TS 33.127 V18.2.0. The first positioning request 1820 comprises a GPSI corresponding to the target inbound roaming UE. In **Figure 18****,** an embodiment of the step 1710 of the method 1700 is provided. The LI-MS device 1810 may host a LI-MS software allowing to perform functionality of a LI-MS, such as mediation and delivery of intercepted data related to the target inbound roaming UE to a querying LEA 1830. Indeed, the LI-MS device 1810 may receive a positioning request for the target inbound roaming UE from the LEA 1830. The positioning request for the target inbound roaming UE from the LEA 1830 includes the GPSI of the target inbound roaming UE. Indeed, the LEA 1830 does not have access to other identification of the target inbound roaming UE than the GPSI.

The method 1700 comprises transmitting 1720, to the ICF device 1510, a query message 1620 (shown in Figure 16) for obtaining a SUPI associated to the GPSI corresponding to the target inbound roaming UE. The target inbound roaming UE of method 1700 corresponds to the target inbound roaming UE of method 1300, as described above. The query message 1620 for obtaining a SUPI associated to the GPSI corresponding to the target inbound roaming UE, transmitted in step 1720 of the method 1700, corresponds to the query message received in step 1330 of the method 1300. In particular, the SUPI is a unique identifier of the individual owning the target inbound roaming UE as the SUPI is related to the target inbound roaming UE's plan subscriber. Thus, obtaining the IMSI associated to the GPSI correspond to the target inbound roaming UE allows to query for a position related to the SUPI corresponding to the target inbound roaming UE.

The method 1700 comprises receiving 1730, from the ICF device 1510 a response message 1630 (shown in Figure 16) comprising the SUPI corresponding to the target inbound roaming UE, and a serving AMF identifier corresponding to the target inbound roamer. The response message received in step 1730 of the method 1700 corresponds to the response message transmitted in step 1340 of the method 1300.

The method 1700 comprises transmitting 1740 to an AMF device 1910 associated to the serving AMF identifier, a second positioning request 1920. The second positioning request 1920 comprises the SUPI corresponding to the target inbound roaming UE. In **Figure 19****,** an embodiment of the step 1740 and step 1750 of the method 1700 is provided. The AMF device 1910 may host an AMF software so as to perform the functionalities of an AMF, such as mobility session management, roaming and handovers from the home network 1430 to the visited communications network 1420. The second positioning request 1920 transmitted in step 1740 of the method 1700 may be an Namf_Location_ProvidePositininginfo Request according to 3GPP TS 23.273, such as V18.0.0. The Namf_Location_ProvidePositininginfo Request may include the SUPI of the target inbound roaming UE. The AMF device 1910 may obtain the position of the target inbound roaming UE by performing a Location Service Procedure according to 3GPP TS 23.273 V18.0.0 section 6.

The method 1700 comprises receiving 1750, from the AMF device 1910, position information 1930 corresponding to the target inbound roaming UE. The positioning information may comprise geographical information and/or a location in local coordinates, such as latitude and longitude of the target inbound roaming UE. The positioning information 1930 may be included in a Namf_Location_ProvidePositioningInfo Response according to 3GPP TS 23.273 V18.0.0.

The method 1700 comprises transmitting 1760, to the LI-MS device 1810, the position information corresponding to the target inbound roaming UE.

In an embodiment, the LI-GMLC device 1610 is configured to communicate with the ICF device 1510 over a NLh interface. The LI-GMLC device 1610 implements the NLh interface according to 3GPP TS 23.503 such as V18.0.0, so as to allow reception and transmission of the query message 1620 transmitted in step 1720 of the method 1700, and the response message 1630 received in step 1730 of the method 1700.

In an embodiment, the query message 1620, transmitted in step 1720 of the method 1700, is transmitted over the NLh interface. In an embodiment, the query message 1620, transmitted in step 1720 of the method 1700 is a UDM_UECM_Get message.

In an embodiment, the response message 1630, received in step 1730 of the method 1700, is received over the over the NLh interface. In an embodiment, the response message 1630, received in step 1730 of the method 1700, is a UDM_UECM_Response message.

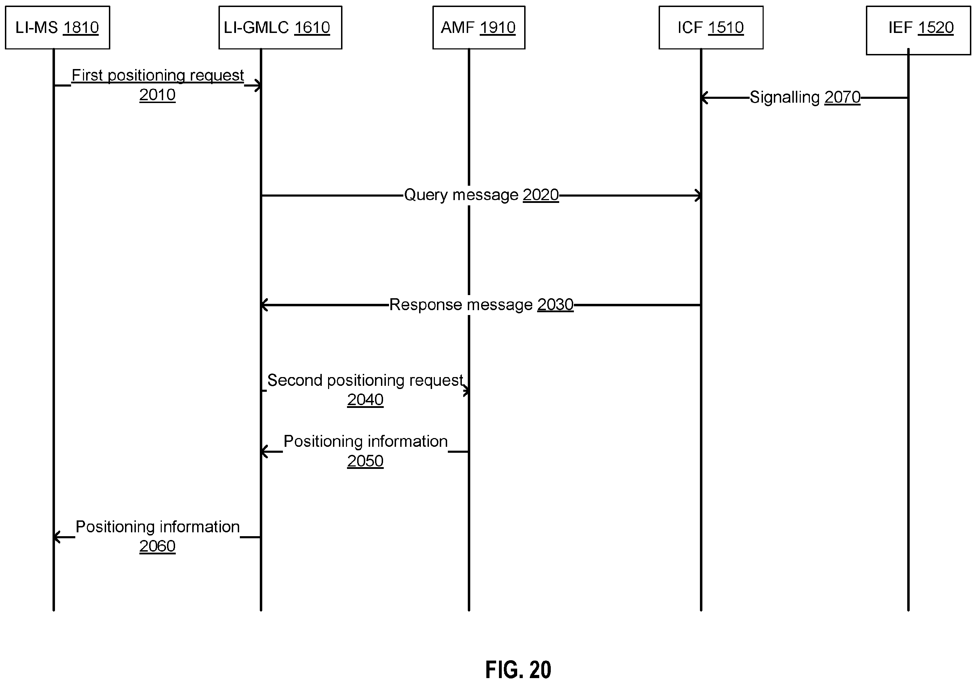

In **Figure 20****,** an illustrative example of message exchanged between the LI-MS device 1810, the LI-GMLC device 1610, the AMF device 1910, the ICF device 1510, and the IEF device 1520 according to embodiments, is provided.

The LI-GMLC device 1610 is configured to receive a first positioning request 2010 from the LI-MS device 1810. In an embodiment, the first positioning request 2010 corresponds to the first positioning request 1820 received in step 1710 of the method 1700.

The LI-GMLC device 1610 is configured to transmit a query message 2020 to the ICF device 1510. In an embodiment, the query message 2020 corresponds to the query message 1620 transmitted in step 1720 of the method 1700, and the query message 1620 received in step 1330 of the method 1300.

The ICF device 1510 is configured to receive signalling 2070. In an embodiment, the signalling 2070 corresponds to the signalling 1515 received in step 1310 of the method 1300.

The ICF device 1510 is configured to transmit a response message 2030. In an embodiment, the response message 2030 corresponds to the response message 1630 transmitted in step 1340 of the method 1300, and the response message received in step 1730 of the method 1700.

The LI-GMLC device 1610 is configured to transmit a second positioning request 2040, to the AMF device 1910. In an embodiment, the second positioning request 2040 corresponds to the second positioning request 1920 transmitted in step 1740 of the method 1700.

The LI-GMLC device 1610 is configured to receive a positioning information 2050 from the AMF device 1910. In an embodiment, the positioning information 2050 corresponds to the positioning information 1930 received in step 1750 of the method 1700.

The LI-GMLC device 1610 is configured to transmit the positioning information 2060 to the LI-MS device 1830. In an embodiment, the positioning information 2060 corresponds to the positioning information transmitted in step 1760 of the method 1700.

In **Figure 21****,** a block diagram of the ICF device 1510 for LI and data retention in the visited communications network 1420 of the one or more inbound roaming UEs 1410, 1415, is provided. The ICF device 1510 comprises a first receiving unit 2110. The ICF device 1510 comprises a transmitting unit 2120. The ICF device 1410 comprises a storing unit 2130. The ICF device 1410 comprises a second receiving unit 2111.

The first receiving unit 2110 is configured to cause the ICF device 1510 to perform the step 1310 of the method 1300 as described above. The second receiving unit 2111 is configured to cause the ICF device 1510 to perform the step 1330 of the method 1300 as described above.

The transmitting unit 2120 is configured to cause the ICF device 1510 to perform the step 1340 of the method 1300 as described above.

The storing unit 2130 is configured to cause the ICF device 1510 to perform the step 1320 of the method 1300 as described above.

In an embodiment, the receiving units 2110 and 2111 and the transmitting unit 2120 are a same unit, such as a transceiver unit 2140.

In an embodiment, the first receiving unit 2110 and the second receiving unit 2111 are the same unit.

The receiving units 2110-2111, the transmitting unit 2120, and the storing unit 2130, illustrated in Figure 21, may be implemented as a hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above with regards to the method 1300.

In **Figure 22****,** a block diagram of the LI-GMLC device 1610 in the visited communications network 1420 of the one or more inbound roaming UEs 1410, 1415, is provided. The LI-GMLC device 1610 comprises a first receiving unit 2210. The LI-GMLC device 1610 comprises a second receiving unit 2211. The LI-GMLC device 1610 comprises a third receiving unit 2212. The LI-GMLC device 1610 comprises a first transmitting unit 2220. The LI-GMLC device 1610 comprises a second transmitting unit 2221. The LI-GMLC device 1610 comprises a third transmitting unit 2222.

The first receiving unit 2210 is configured to cause the LI-GMLC device 1610 to perform the step 1710 of the method 1700 as described above. The second receiving unit 2211 is configured to cause the LI-GMLC device 1610 to perform the step 1730 of the method 1700 as described above. The third receiving unit 2212 is configured to cause the LI-GMLC device 1610 to perform the step 1750 of the method 1700 as described above.

The first transmitting unit 2220 is configured to cause the LI-GMLC device 1610 to perform the step 1720 of the method 1700 as described above. The second transmitting unit 2221 is configured to cause the LI-GMLC device 1610 to perform the step 1740 of the method 1700 as described above. The third transmitting unit 2222 is configured to cause the LI-GMLC device 1610 to perform the step 1760 of the method 1700 as described above.

In an embodiment, the receiving units 2210-2212 and the transmitting units 2220-2222 are a same unit, such as a transceiver unit 2230.

In an embodiment, the first receiving unit 2210, the second receiving unit 2211, and the third receiving unit 2212 are the same unit.

In an embodiment, the first transmitting unit 2220, the second transmitting unit 2221, and the third transmitting unit 2222 are the same unit.

The receiving units 2210-2212, and the transmitting units 2220-2222, illustrated in Figure 22, may be implemented as a hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above with regards to the method 1700.

In **Figure 23****,** an embodiment of the ICF device 1510 is provided. The ICF device 1510 comprises a processor 2310, and a computer readable storage medium 2320 in the form of a memory 2325. The memory 2325 contains a computer program 2330 comprising instructions executable by the processor 2310 whereby the ICF device 1510 is operative to perform the steps of the method 1300.

In **Figure 24****,** an embodiment of the LI-GMLC device 1610 is provided. The LI-GMLC device 1610 comprises a processor 2410, and a computer readable storage medium 2420 in the form of a memory 2425. The memory 2425 contains a computer program 2430 comprising instructions executable by the processor 2410 whereby the LI-GMLC device 1610 is operative to perform the steps of the method 1700.

The (non-transitory) computer readable storage media mentioned above may be an Electrically Erasable Programmable Read-Only Memory (EEPROM), a flash memory, Field Programmable Gate Array, and a hard drive.

The processor 2310 of Figure 23, and the processor 2410 of Figure 24, may be a single CPU (Central processing unit), but could also comprise two or more processing units. For example, the processor 2310 of Figure 23, and the processor 2410 of Figure 24 may include general purpose microprocessors; instructions set processors and/or related chips sets and/or special purpose microprocessors such as Application Specific Circuit (ASICs). The processor 2310 of Figure 23 and the processor 2410 of Figure 24 may also comprise board memory for caching purposes.

The computer program 2330 of Figure 23, and the computer program 2430 of Figure 24 may be carried by a computer program product connected to the processor 2310 of Figure 23, and the processor 2410 of Figure 24. The computer program products may be or comprise a non-transitory computer readable storage medium on which the computer programs 2330 of Figure 23 and the computer program 2430 of Figure 24 are stored. For example, the computer program products may be a flash memory, a Random-access memory (RAM), a Read-Only memory (ROM), or an EEPROM, and the computer programs described above could in alternative embodiments be distributed on different computer program products in the form of memories.

It shall be understood that although the terms "first", "second", etc. may be used herein to describe various elements, these elements should not be limited by these terms. These terms are only used to distinguish one element from another. For example, the first request message could be termed the second request message, and similarly, the second request message could be termed the first request message.

As used herein, the term "and/or" includes any and all combinations of one or more of the associated listed terms. The terminology used herein is for the purpose of describing particular embodiments only and is not intended to be limited of example embodiments. As used herein, the single forms "a", "an", and "the" are intended to include the plural forms as well, unless the context clearly indicated otherwise. It will be further understood that the terms "comprises", "comprising", "has", "having", "includes", and/or "including", when used herein, specify the presence of stated features, elements, and/or components etc. but do not preclude the presence or addition of one or more other features, elements, components, and/or combinations thereof.

This disclosure has been described above in reference to embodiments thereof. It should be understood that various modifications, alternatives, and additions can be made by those skilled in the art without departing from the scope of the disclosure. Therefore, the scope of the disclosure is not limited to the above particular embodiments but only defined by the claims as attached.

## Claims

1. A Lawful Interception Mirror Management System State Function, LMISF, device (310) for lawful interception and data retention in a visited communications network (220) for one or more inbound roaming User Equipments, UEs (210, 215), the LMISF device (310) being configured to:
- receive signalling (315) related to the one or more inbound roaming UEs (210, 215), wherein the signalling (315) comprises a Mobile Station International Subscriber Directory Number, MSISDN, and an International Mobile Subscriber Identity, IMSI, corresponding to each of the one or more inbound roaming UEs (210, 215), and a serving Mobility Management Entity, MME, identifier for each of the one or more inbound roaming UEs (210, 215);
- store an association among the MSISDN, the corresponding IMSI, and the serving MME identifier for each of the one or more inbound roaming UEs (210, 215);
- receive, from a Lawful Interception Gateway Mobile Location Centre, LI-GMLC, device (410), a query message (420) containing an MSISDN of a target inbound roaming UE and requesting an associated IMSI and a serving MME identifier corresponding to the MSISDN; and
- transmit, to the LI-GMLC device (410), a response message (430) comprising the associated IMSI and the serving MME identifier corresponding to the MSISDN for the target inbound roaming UE, if the MSISDN of the target inbound roaming UE is stored in the LMISF device (310).

2. A Lawful Interception Gateway Mobile Location Centre, LI-GMLC, device (410) in a visited communications network (220) for one or more inbound roaming User Equipments, UEs (210, 215), being configured to:
- receive, from a Lawful Interception Management System, LI-MS, device (610) a first positioning request (620) for a target inbound roaming user equipment, UE, the first positioning request (630) comprises a Mobile Station International Subscriber Directory Number, MSISDN, corresponding to the inbound roaming UE;
- transmit, to a Lawful Interception Mirror Management System State Function, LMISF, device (310), a query message (420) for obtaining an IMSI associated to the MSISDN corresponding to the target inbound roaming UE;
- receive, from the LMISF device (310), a response message (430) comprising the IMSI corresponding to the target inbound roaming UE , and a serving MME identifier corresponding to the target inbound roaming UE; and
- transmit, to an MME device (710) associated to the serving MME identifier, a second positioning request (720), the second positioning request (720) comprising the IMSI;
- receive, from the MME device (710), position information (730) corresponding to the target inbound roaming UE;
transmit, to the LI-MS (610), the position information (730) corresponding to the target inbound roaming UE.

3. A method (100) performed by a Lawful Interception Mirror Management System State Function, LMISF, device (310) for lawful interception and data retention in a visited communications network (220) for one or more inbound roaming User Equipments, UEs (210, 215), the method (100) comprising:
- receiving (110) signalling (315) related to the one or more inbound roaming UEs (210, 215), wherein the signalling (315) comprises a Mobile Station International Subscriber Directory Number, MSISDN, and an International Mobile Subscriber Identity, IMSI, corresponding to each of the one or more inbound roaming UEs (210, 215), and a serving Mobility Management Entity, MME, identifier for each of the one or more inbound roaming UEs (210, 215);
- storing (120) an association among the MSISDN, the corresponding IMSI, and the serving MME identifier for each of the one or more inbound roaming UEs (210, 215);
- receiving (130), from a Lawful Interception Gateway Mobile Location Centre, LI-GMLC, device (410) a query message (420) containing a MSISDN of a target inbound roaming UE and requesting an associated IMSI and MME identifier corresponding to the MSISDN; and
- transmitting (140), to the LI-GMLC device (410), a response message (430) comprising the associated IMSI and the serving MME identifier corresponding to the MSISDN for the target inbound roaming UE, if the MSISDN of the target inbound roaming UE is stored in the LMISF device.

4. A method (500) performed by a Lawful Interception Gateway Mobile Location Centre, LI-GMLC, device (410) in a visited communications network (220) for one or more inbound roaming User Equipments, UEs (210, 215), the method (500) comprising:
- receiving (510), from a Lawful Interception Management System, LI-MS, device (610) a first positioning request (620) for a target inbound roaming user equipment, UE, the first positioning request (620) comprises a Mobile Station International Subscriber Directory Number, MSISDN, corresponding to the inbound roaming UE;
- transmitting (520), to a Lawful Interception Mirror Management System State Function, LMISF, device (310), a query message (420) for obtaining an IMSI associated to the MSISDN corresponding to the target inbound roaming UE;
- receiving (530), from the LMISF device (310), a response message (430) comprising the IMSI corresponding to the target inbound roaming UE, and a serving MME identifier corresponding to the target inbound roaming UE; and
- transmitting (540), to a Mobility Management Entity, MME, device (710) associated to the serving MME identifier, a second positioning request, the second positioning request comprises the IMSI;
- receiving (550), from the MME device (710), position information (730) corresponding to the target inbound roaming UE;
- transmitting (560), to the LI-MS device (610), the position information (730) corresponding to the target inbound roaming UE.

5. A computer program (1130) comprising instructions, which when executed on a Lawful Interception Mirror Management System State Function, LMISF, device (310) for lawful interception and data retention in a visited communications network (220) for one or more inbound roaming User Equipments, UEs (210, 215), causes the LMISF device (310) to:
- receive signalling (315) related to the one or more inbound roaming UEs (210, 215), wherein the signalling (315) comprises a Mobile Station International Subscriber Directory Number, MSISDN, and an International Mobile Subscriber Identity, IMSI, corresponding to each of the one or more inbound roaming UEs (210, 215), and a serving Mobility Management Entity, MME, identifier for each of the one or more inbound roaming UEs (210, 215);
- store an association among the MSISDN, the corresponding IMSI, and the serving MME identifier for each of the one or more inbound roaming UEs (210, 215);
- receive, from a Lawful Interception Gateway Mobile Location Centre, LI-GMLC, device (410) a query message (420) containing a MSISDN of a target inbound roaming UE and requesting an associated IMSI and MME identifier corresponding to the MSISDN; and
- transmit, to the LI-GMLC device (410), a response message (430) comprising the associated IMSI and the serving MME identifier corresponding to the MSISDN for the target inbound roaming UE, if the MSISDN of the target inbound roaming UE is stored in the LMISF device (310).

6. A computer program (1230) comprising instructions, which when executed by a Lawful Interception Gateway Mobile Location Centre, LI-GMLC, device (410) in a visited communications network (220) for one or more inbound roaming User Equipments, UEs (210, 215), causes the LI-GMLC device (410) to:
- receive, from a Lawful Interception Management System, LI-MS, device (610) a first positioning request (620) for a target inbound roaming user equipment, UE, the first positioning request (620) comprising a Mobile Station International Subscriber Directory Number, MSISDN, corresponding to the inbound roaming UE;
- transmit, to a Lawful Interception Mirror Management System State Function, LMISF, device (310), a query message (420) for obtaining an IMSI associated to the MSISDN corresponding to the target inbound roaming UE;
- receive, from the LMISF device (310), a response message (430) comprising the IMSI corresponding to the target inbound roaming UE , and a serving MME identifier corresponding to the target inbound roaming UE; and
- transmit, to a Mobility Management Entity, MME, device (710) associated to the serving MME identifier, a second positioning request (720), the second positioning request (720) comprising the IMSI;
- receive, from the MME device (710), position information (730) corresponding to the target inbound roaming UE;
- transmit, to the LI-MS device (610), the position information (730) corresponding to the target inbound roaming UE.

7. An Identity Caching Function, ICF, device (1410) for lawful interception and data retention in a visited communications network (1420) for one or more inbound roaming User Equipments, UEs (1410, 1415), the ICF device (1510) is configured to:
- receive signalling (1515) related to one or more inbound roaming UEs (1410, 1415), wherein the signalling (1515) comprises a Subscription Permanent Identifier, SUPI, and a Generic Public Subscription Identifier, GPSI corresponding to each of the one or more inbound roaming UEs (1410, 1415), and a serving Access Mobility and Management Function, AMF, identifier for each of the one or more inbound roaming UEs (1410, 1415);
- store an association among the GPSI, the corresponding SUPI, and the serving AMF identifier for each of the one or more inbound roaming UEs (1410, 1415);
- receive, from a Lawful Interception Gateway Mobile Location Centre, LI-GMLC, device (1610), a query message (1620) containing a GPSI of a target inbound roaming UE and requesting an associated SUPI and AMF identifier corresponding to the GPSI; and
- transmit, to the LI-GMLC, a response message (1630) comprising the associated SUPI, and the serving AMF identifier corresponding to the GPSI for the target inbound roaming UE.

8. A Lawful Interception Gateway Mobile Location Centre, LI-GMLC, device (1610) in a visited communications network (1420) for one or more inbound roaming User Equipments, UEs (1410, 1415), being configured to:
- receive, from a Lawful Interception Management System, LI-MS, device (1810) a first positioning request (1820) for a target inbound roaming UE, the first positioning request (1820) comprises a Generic Public Subscription Identifier, GPSI, corresponding to the target inbound roaming UE;
- transmit, to an Identity Caching Function, ICF, device (1510), a query message (1620) for obtaining a Subscription Permanent Identifier, SUPI associated to the GPSI corresponding to the target inbound roaming UE;
- receive, from the ICF device (1510), a response message (1630) comprising the SUPI corresponding to the target inbound roaming UE, and a serving AMF identifier corresponding to the target inbound roamer; and
- transmit, to an Access Mobility Management Function, AMF, device (1910) associated to the serving AMF identifier, a second positioning request, the second positioning request comprises the SUPI;
- receive, from the AMF device (1910), position information (1930) corresponding to the target inbound roaming UE;
- transmit, to the LI-MS device (1810), the position information (1930) corresponding to the target inbound roaming UE.

9. A method (1700) performed by an Identity Caching Function, ICF, device (1510) for lawful interception and data retention in a visited communications network (1420) for one or more inbound roaming User Equipments, UEs (1410, 1415), the method comprises:
- receiving (1310) signalling (1515) related to one or more inbound roaming UEs (1410, 1415), wherein the signalling (1515) comprises a Subscription Permanent Identifier, SUPI, and a Generic Public Subscription Identifier, GPSI corresponding to each of the one or more inbound roaming UEs (1410, 1415), and a serving Access Mobility and Management Function, AMF, identifier for each of the one or more inbound roaming UEs (1410, 1415);
- storing (1320) an association among the GPSI, the corresponding SUPI, and the serving g AMF identifier for each of the one or more inbound roaming UEs (1410, 1415);
- receiving (1330), from a Lawful Interception Gateway Mobile Location Centre, LI-GMLC, device (1610), a query message (1620) containing a GPSI of a target inbound roaming UE and requesting an associated SUPI and AMF identifier corresponding to the GPSI; and
- transmitting (1340), to the LI-GMLC device (1610), a response message (1630) comprising the associated SUPI, and the serving AMF identifier corresponding to the GPSI for the target inbound roaming UE.

10. A method (1700) performed by a Lawful Interception Gateway Mobile Location Centre, LI-GMLC, device (1610) in a visited communications network (1420) for one or more inbound roaming User Equipments, UEs (1410, 1415), the method (1700) comprising:
- receiving (1710), from a Lawful Interception Management System, LI-MS, device (1810), a first positioning request (1820) for a target inbound roaming UE, the first positioning request (1820) comprising a Generic Public Subscription Identifier, GPSI, corresponding to the target inbound roaming UE;
- transmitting (1720), to an Identity Caching Function, ICF, device (1510), a query message (1620) for obtaining a Subscription Permanent Identifier, SUPI associated to the GPSI corresponding to the target inbound roaming UE;
- receiving (1730), from the ICF device (1510), a response message (1630) comprising the SUPI corresponding to the target inbound roaming UE, and a serving AMF identifier corresponding to the target inbound roamer; and
- transmitting (1740), to an Access Mobility and Management Function, AMF, device (1910) associated to the serving AMF identifier, a second positioning request, the second positioning request comprises the SUPI;
- receiving (1750), from the AMF device (1910), position information (1930) corresponding to the target inbound roaming UE;
- transmitting (1760), to the LI-MS device (1810), the position information (1930) corresponding to the target inbound roaming UE.

11. A computer program (1530) comprising instructions, which when executed by an Identity Caching Function, ICF, device (1510) for lawful interception and data retention in a visited communications network (1420) for one or more inbound roaming User Equipments, UEs (1410, 1415), causes the ICF device (1510) to:
- receive signalling (1515) related to one or more inbound roaming UEs (1410, 1415), wherein the signalling (1515) comprises a Subscription Permanent Identifier, SUPI, and a Generic Public Subscription Identifier, GPSI corresponding to each of the one or more inbound roaming UEs (1410, 1415), and a serving Access Mobility and Management Function, AMF, identifier for each of the one or more inbound roaming UEs (1410, 1415);
- store an association among the GPSI, the corresponding SUPI, and the serving g AMF identifier for each of the one or more inbound roaming UEs (1410, 1415);
- receive, from a Lawful Interception Gateway Mobile Location Centre, LI-GMLC, device (1610), a query message (1620) containing a GPSI of a target inbound roaming UE and requesting an associated SUPI and AMF identifier corresponding to the GPSI; and
- transmit, to the LI-GMLC device (1610), a response message (1630) comprising the associated SUPI, and the serving AMF identifier corresponding to the GPSI for the target inbound roaming UE.

12. A computer program (1630) comprising instructions, which when executed by a Lawful Interception Gateway Mobile Location Centre, LI-GMLC, device (1610) in a visited communications network (1420) for one or more inbound roaming User Equipments, UEs (1410, 1415), causes the LI-GMLC device (1610) to:
- receive, from a Lawful Interception Management System, LI-MS, device (1810) a first positioning request (1820) for a target inbound roaming UE, the first positioning request comprises a Generic Public Subscription Identifier, GPSI, corresponding to the target inbound roaming UE;
- transmit, to an Identity Caching Function, ICF, device (1510), a query message (1620) for obtaining a Subscription Permanent Identifier, SUPI associated to the GPSI corresponding to the target inbound roaming UE;
- receive, from the ICF device (1510), a response message (1630) comprising the SUPI corresponding to the target inbound roaming UE, and a serving AMF identifier corresponding to the target inbound roamer; and
- transmit, to an Access Mobility Management Function, AMF, device (1910) associated to the serving AMF identifier, a second positioning request (1920), the second positioning request (1920) comprising the SUPI;
- receive, from the AMF device (1910), position information (1930) corresponding to the target inbound roaming UE;
- transmit, to the LI-MS device (1810), the position information (1930) corresponding to the target inbound roaming UE.

13. A computer readable storage medium comprising a computer program according to claim 5, 6, 11, and/or 12.

## Patentansprüche

1. Lawful Interception Mirror Management System State Function-Vorrichtung, LMISF-Vorrichtung, (310) zur gesetzlichen Überwachung und Datenerhaltung in einem Besucher-Kommunikationsnetzwerk (220) für eine oder mehrere ankommende roamende Benutzereinrichtungen, UEs, (210, 215), wobei die LMISF-Vorrichtung (310) zu Folgendem konfiguriert ist:
- Empfangen von Signalisierung (315) in Bezug auf die eine oder die mehreren ankommenden roamenden UEs (210, 215), wobei die Signalisierung (315) eine internationale Teilnehmerverzeichnisnummer einer Mobilstation, MSISDN, und eine internationale Mobilteilnehmeridentität, IMSI, die jeder der einen oder der mehreren ankommenden roamenden UEs (210, 215) entsprechen, und eine Kennung einer bedienenden Mobilitätsverwaltungsentität, MME, für jede der einen oder der mehreren ankommenden roamenden UEs (210, 215) umfasst;
- Speichern einer Assoziation zwischen der MSISDN, der entsprechenden IMSI und der Kennung der bedienenden MME für jede der einen oder der mehreren ankommenden roamenden UEs (210, 215);
- Empfangen einer Abfragenachricht (420), die eine MSISDN einer ankommenden roamenden Ziel-UE enthält, von einer Lawful Interception Gateway Mobile Location Centre-Vorrichtung, LI-GMLC-Vorrichtung, (410) und Anfordern einer assoziierten IMSI und einer Kennung einer bedienenden MME, die der MSISDN entsprechen; und
- Senden einer Antwortnachricht (430), die die assoziierte IMSI und die Kennung der bedienenden MME umfasst, die der MSISDN für die ankommende roamende Ziel-UE entsprechen, an die LI-GMLC-Vorrichtung (410), falls die MSISDN der ankommenden roamenden Ziel-UE in der LMISF-Vorrichtung (310) gespeichert ist.

2. Lawful Interception Gateway Mobile Location Centre-Vorrichtung, LI-GMLC-Vorrichtung, (410) in einem Besucher-Kommunikationsnetzwerk (220) für eine oder mehrere ankommende roamende Benutzereinrichtungen, UEs, (210, 215), die zu Folgendem konfiguriert ist:
- Empfangen einer ersten Positionsbestimmungsanforderung (620) für eine ankommende roamende Ziel-Benutzereinrichtung, Ziel-UE, von einer Lawful Interception Management System-Vorrichtung, LI-MS-Vorrichtung, (610), wobei die erste Positionsbestimmungsanforderung (630) eine internationale Teilnehmerverzeichnisnummer einer Mobilstation, MSISDN, umfasst, die der ankommenden roamenden UE entspricht;
- Senden einer Abfragenachricht (420) zum Erhalten einer IMSI, die mit der MSISDN assoziiert ist und der ankommenden roamenden Ziel-UE entspricht, an eine Lawful Interception Mirror Management System State Function-Vorrichtung, LMISF-Vorrichtung, (310);
- Empfangen einer Antwortnachricht (430), die die IMSI, die der ankommenden roamenden Ziel-UE entspricht, und eine Kennung einer bedienenden MME umfasst, die der ankommenden roamenden Ziel-UE entspricht, von der LMISF-Vorrichtung (310); und
- Senden einer zweiten Positionsbestimmungsanforderung (720) an eine MME-Vorrichtung (710), die mit der Kennung der bedienenden MME assoziiert ist, wobei die zweite Positionsbestimmungsanforderung (720) die IMSI umfasst;
- Empfangen von Positionsinformationen (730), die der ankommenden roamenden Ziel-UE entsprechen, von der MME-Vorrichtung (710);
- Senden der Positionsinformationen (730), die der ankommenden roamenden Ziel-UE entsprechen, an die LI-MS-Vorrichtung (610).

3. Verfahren (100), das von einer Lawful Interception Mirror Management System State Function-Vorrichtung, LMISF-Vorrichtung, (310) durchgeführt wird, zur gesetzlichen Überwachung und Datenerhaltung in einem Besucher-Kommunikationsnetzwerk (220) für eine oder mehrere ankommende roamende Benutzereinrichtungen, UEs, (210, 215), wobei das Verfahren (100) Folgendes umfasst:
- Empfangen (110) von Signalisierung (315) in Bezug auf die eine oder die mehreren ankommenden roamenden UEs (210, 215), wobei die Signalisierung (315) eine internationale Teilnehmerverzeichnisnummer einer Mobilstation, MSISDN, und eine internationale Mobilteilnehmeridentität, IMSI, die jeder der einen oder der mehreren ankommenden roamenden UEs (210, 215) entsprechen, und eine Kennung einer bedienenden Mobilitätsverwaltungsentität, MME, für jede der einen oder der mehreren ankommenden roamenden UEs (210, 215) umfasst;
- Speichern (120) einer Assoziation zwischen der MSISDN, der entsprechenden IMSI und der Kennung der bedienenden MME für jede der einen oder der mehreren ankommenden roamenden UEs (210, 215);
- Empfangen (130) einer Abfragenachricht (420), die eine MSISDN einer ankommenden roamenden Ziel-UE enthält, von einer Lawful Interception Gateway Mobile Location Centre-Vorrichtung, LI-GMLC-Vorrichtung, (410) und Anfordern einer assoziierten IMSI und MME-Kennung, die der MSISDN entsprechen; und
- Senden (140) einer Antwortnachricht (430), die die assoziierte IMSI und die Kennung der bedienenden MME umfasst, die der MSISDN für die ankommende roamende Ziel-UE entsprechen, an die LI-GMLC-Vorrichtung (410), falls die MSISDN der ankommenden roamenden Ziel-UE in der LMISF-Vorrichtung gespeichert ist.

4. Verfahren (500), das von einer Lawful Interception Gateway Mobile Location Centre-Vorrichtung, LI-GMLC-Vorrichtung, (410) in einem Besucher-Kommunikationsnetzwerk (220) für eine oder mehrere ankommende roamende Benutzereinrichtungen, UEs, (210, 215) durchgeführt wird, wobei das Verfahren (500) Folgendes umfasst:
- Empfangen (510) einer ersten Positionsbestimmungsanforderung (620) für eine ankommende roamende Ziel-Benutzereinrichtung, Ziel-UE, von einer Lawful Interception Management System-Vorrichtung, LI-MS-Vorrichtung, (610), wobei die erste Positionsbestimmungsanforderung (620) eine internationale Teilnehmerverzeichnisnummer einer Mobilstation, MSISDN, umfasst, die der ankommenden roamenden UE entspricht;
- Senden (520) einer Abfragenachricht (420) zum Erhalten einer IMSI, die mit der MSISDN assoziiert ist und der ankommenden roamenden Ziel-UE entspricht, an eine Lawful Interception Mirror Management System State Function-Vorrichtung, LMISF-Vorrichtung, (310);
- Empfangen (530) einer Antwortnachricht (430), die die IMSI, die der ankommenden roamenden Ziel-UE entspricht, und eine Kennung einer bedienenden MME umfasst, die der ankommenden roamenden Ziel-UE entspricht, von der LMISF-Vorrichtung (310); und
- Senden (540) einer zweiten Positionsbestimmungsanforderung an eine Mobilitätsverwaltungsentitäts-Vorrichtung, MME-Vorrichtung, (710), die mit der Kennung der bedienenden MME assoziiert ist, wobei die zweite Positionsbestimmungsanforderung die IMSI umfasst;
- Empfangen (550) von Positionsinformationen (730), die der ankommenden roamenden Ziel-UE entsprechen, von der MME-Vorrichtung (710);
- Senden (560) von Positionsinformationen (730), die der ankommenden roamenden Ziel-UE entsprechen, an die LI-MS-Vorrichtung (610).

5. Computerprogramm (1130), umfassend Anweisungen, die bei Ausführung auf einer Lawful Interception Mirror Management System State Function-Vorrichtung, LMISF-Vorrichtung, (310) zur gesetzlichen Überwachung und Datenerhaltung in einem Besucher-Kommunikationsnetzwerk (220) für eine oder mehrere ankommende roamende Benutzereinrichtungen, UEs, (210, 215) die LMISF-Vorrichtung (310) zu Folgendem veranlassen:
- Empfangen von Signalisierung (315) in Bezug auf die eine oder die mehreren ankommenden roamenden UEs (210, 215), wobei die Signalisierung (315) eine internationale Teilnehmerverzeichnisnummer einer Mobilstation, MSISDN, und eine internationale Mobilteilnehmeridentität, IMSI, die jeder der einen oder der mehreren ankommenden roamenden UEs (210, 215) entsprechen, und eine Kennung einer bedienenden Mobilitätsverwaltungsentität, MME, für jede der einen oder der mehreren ankommenden roamenden UEs (210, 215) umfasst;
- Speichern einer Assoziation zwischen der MSISDN, der entsprechenden IMSI und der Kennung der bedienenden MME für jede der einen oder der mehreren ankommenden roamenden UEs (210, 215);
- Empfangen einer Abfragenachricht (420), die eine MSISDN einer ankommenden roamenden Ziel-UE enthält, von einer Lawful Interception Gateway Mobile Location Centre-Vorrichtung, LI-GMLC-Vorrichtung, (410) und Anfordern einer assoziierten IMSI und MME-Kennung, die der MSISDN entsprechen; und
- Senden einer Antwortnachricht (430), die die assoziierte IMSI und die Kennung der bedienenden MME umfasst, die der MSISDN für die ankommende roamende Ziel-UE entsprechen, an die LI-GMLC-Vorrichtung (410), falls die MSISDN der ankommenden roamenden Ziel-UE in der LMISF-Vorrichtung (310) gespeichert ist.

6. Computerprogramm (1230), umfassend Anweisungen, die bei Ausführung auf einer Lawful Interception Gateway Mobile Location Centre-Vorrichtung, LI-GMLC-Vorrichtung, (410) in einem Besucher-Kommunikationsnetzwerk (220) für eine oder mehrere ankommende roamende Benutzereinrichtungen, UEs, (210, 215) die LI-GMLC-Vorrichtung (410) zu Folgendem veranlassen:
- Empfangen einer ersten Positionsbestimmungsanforderung (620) für eine ankommende roamende Ziel-Benutzereinrichtung, Ziel-UE, von einer Lawful Interception Management System-Vorrichtung, LI-MS-Vorrichtung, (610), wobei die erste Positionsbestimmungsanforderung (620) eine internationale Teilnehmerverzeichnisnummer einer Mobilstation, MSISDN, umfasst, die der ankommenden roamenden UE entspricht;
- Senden einer Abfragenachricht (420) zum Erhalten einer IMSI, die mit der MSISDN assoziiert ist und der ankommenden roamenden Ziel-UE entspricht, an eine Lawful Interception Mirror Management System State Function-Vorrichtung, LMISF-Vorrichtung, (310);
- Empfangen einer Antwortnachricht (430), die die IMSI, die der ankommenden roamenden Ziel-UE entspricht, und eine Kennung einer bedienenden MME umfasst, die der ankommenden roamenden Ziel-UE entspricht, von der LMISF-Vorrichtung (310); und
- Senden einer zweiten Positionsbestimmungsanforderung (720) an eine Mobilitätsverwaltungsentitäts-Vorrichtung, MME-Vorrichtung, (710), die mit der Kennung der bedienenden MME assoziiert ist, wobei die zweite Positionsbestimmungsanforderung (720) die IMSI umfasst;
- Empfangen von Positionsinformationen (730), die der ankommenden roamenden Ziel-UE entsprechen, von der MME-Vorrichtung (710);
- Senden der Positionsinformationen (730), die der ankommenden roamenden Ziel-UE entsprechen, an die LI-MS-Vorrichtung (610).

7. Vorrichtung mit Identitäts-Caching-Funktion, ICF, (1410) zur gesetzlichen Überwachung und Datenerhaltung in einem Besucher-Kommunikationsnetzwerk (1420) für eine oder mehrere ankommende roamende Benutzereinrichtungen, UEs, (1410, 1415), wobei die ICF-Vorrichtung (1510) zu Folgendem konfiguriert ist:
- Empfangen von Signalisierung (1515) in Bezug auf eine oder mehrere ankommende roamenden UEs (1410, 1415), wobei die Signalisierung (1515) eine permanente Abonnementkennung, SUPI, und eine generische öffentliche Abonnementkennung, GPSI, die jeder der einen oder der mehreren ankommenden roamenden UEs (1410, 1415) entsprechen, und eine Kennung einer bedienenden Zugangs- und Mobilitätsverwaltungsfunktion, AMF, für jede der einen oder der mehreren ankommenden roamenden UEs (1410, 1415) umfasst;
- Speichern einer Assoziation zwischen der GPSI, der entsprechenden SUPI und der Kennung der bedienenden AMF für jede der einen oder der mehreren ankommenden roamenden UEs (1410, 1415);
- Empfangen einer Abfragenachricht (1620), die eine GPSI einer ankommenden roamenden Ziel-UE enthält, von einer Lawful Interception Gateway Mobile Location Centre-Vorrichtung, LI-GMLC-Vorrichtung, (1610) und Anfordern einer assoziierten SUPI und AMF-Kennung, die der GPSI entsprechen; und
- Senden einer Antwortnachricht (1630), die die assoziierte SUPI und die Kennung der bedienenden AMF umfasst, die der GPSI für die ankommende roamende UE entsprechen, an die LI-GMLC.

8. Lawful Interception Gateway Mobile Location Centre-Vorrichtung, LI-GMLC-Vorrichtung, (1610) in einem Besucher-Kommunikationsnetzwerk (1420) für eine oder mehrere ankommende roamende Benutzereinrichtungen, UEs, (1410, 1415), die zu Folgendem konfiguriert ist:
- Empfangen einer ersten Positionsbestimmungsanforderung (1820) für eine ankommende roamende Ziel-UE von einer Lawful Interception Management System-Vorrichtung, LI-MS-Vorrichtung, (1810), wobei die erste Positionsbestimmungsanforderung (1820) eine generische öffentliche Abonnementkennung, GPSI, umfasst, die der ankommenden roamenden Ziel-UE entspricht;
- Senden einer Abfragenachricht (1620) zum Erhalten einer permanenten Abonnementkennung, SUPI, die mit der GPSI assoziiert ist und der ankommenden roamenden Ziel-UE entspricht, an eine Vorrichtung mit Identitäts-Caching-Funktion, ICF, (1510);
- Empfangen einer Antwortnachricht (1630), die die SUPI, die der ankommenden roamenden Ziel-UE entspricht, und eine Kennung einer bedienenden AMF umfasst, die der ankommenden roamenden Ziel-UE entspricht, von der ICF-Vorrichtung (1510); und
- Senden einer zweiten Positionsbestimmungsanforderung an eine Vorrichtung mit Zugangs- und Mobilitätsverwaltungsfunktion, AMF, (1910), die mit der Kennung der bedienenden AMF assoziiert ist, wobei die zweite Positionsbestimmungsanforderung die SUPI umfasst;
- Empfangen von Positionsinformationen (1930), die der ankommenden roamenden Ziel-UE entsprechen, von der AMF-Vorrichtung (1910);
- Senden der Positionsinformationen (1930), die der ankommenden roamenden Ziel-UE entsprechen, an die LI-MS-Vorrichtung (1810).

9. Verfahren (1700), das von einer Vorrichtung mit Identitäts-Caching-Funktion, ICF, (1510) durchgeführt wird, zur gesetzlichen Überwachung und Datenerhaltung in einem Besucher-Kommunikationsnetzwerk (1420) für eine oder mehrere ankommende roamende Benutzereinrichtungen, UEs, (1410, 1415), wobei das Verfahren Folgendes umfasst:
- Empfangen (1310) von Signalisierung (1515) in Bezug auf eine oder mehrere ankommende roamenden UEs (1410, 1415), wobei die Signalisierung (1515) eine permanente Abonnementkennung, SUPI, und eine generische öffentliche Abonnementkennung, GPSI, die jeder der einen oder der mehreren ankommenden roamenden UEs (1410, 1415) entsprechen, und eine Kennung einer bedienenden Zugangs- und Mobilitätsverwaltungsfunktion, AMF, für jede der einen oder der mehreren ankommenden roamenden UEs (1410, 1415) umfasst;
- Speichern (1320) einer Assoziation zwischen der GPSI, der entsprechenden SUPI und der Kennung der bedienenden AMF für jede der einen oder der mehreren ankommenden roamenden UEs (1410, 1415);
- Empfangen (1330) einer Abfragenachricht (1620), die eine GPSI einer ankommenden roamenden Ziel-UE enthält, von einer Lawful Interception Gateway Mobile Location Centre-Vorrichtung, LI-GMLC-Vorrichtung, (1610) und Anfordern einer assoziierten SUPI und AMF-Kennung, die der GPSI entsprechen; und
- Senden (1340) einer Antwortnachricht (1630), die die assoziierte SUPI und die Kennung der bedienenden AMF umfasst, die der GPSI für die ankommende roamende UE entsprechen, an die LI-GMLC-Vorrichtung (1610).

10. Verfahren (1700), das von einer Lawful Interception Gateway Mobile Location Centre-Vorrichtung, LI-GMLC-Vorrichtung, (1610) in einem Besucher-Kommunikationsnetzwerk (1420) für eine oder mehrere ankommende roamende Benutzereinrichtungen, UEs, (1410, 1415) durchgeführt wird, wobei das Verfahren (1700) Folgendes umfasst:
- Empfangen (1710) einer ersten Positionsbestimmungsanforderung (1820) für eine ankommende roamende Ziel-UE von einer Lawful Interception Management System-Vorrichtung, LI-MS-Vorrichtung, (1810), wobei die erste Positionsbestimmungsanforderung (1820) eine generische öffentliche Abonnementkennung, GPSI, umfasst, die der ankommenden roamenden Ziel-UE entspricht;
- Senden (1720) einer Abfragenachricht (1620) zum Erhalten einer permanenten Abonnementkennung, SUPI, die mit der GPSI assoziiert ist und der ankommenden roamenden Ziel-UE entspricht, an eine Vorrichtung mit Identitäts-Caching-Funktion, ICF, (1510);
- Empfangen (1730) einer Antwortnachricht (1630), die die SUPI, die der ankommenden roamenden Ziel-UE entspricht, und eine Kennung einer bedienenden AMF umfasst, die der ankommenden roamenden Ziel-UE entspricht, von der ICF-Vorrichtung (1510); und
- Senden (1740) einer zweiten Positionsbestimmungsanforderung an eine Vorrichtung mit Zugangs- und Mobilitätsverwaltungsfunktion, AMF, (1910), die mit der Kennung der bedienenden AMF assoziiert ist, wobei die zweite Positionsbestimmungsanforderung die SUPI umfasst;
- Empfangen (1750) von Positionsinformationen (1930), die der ankommenden roamenden Ziel-UE entsprechen, von der AMF-Vorrichtung (1910);
- Senden (1760) von Positionsinformationen (1930), die der ankommenden roamenden Ziel-UE entsprechen, an die LI-MS-Vorrichtung (1810).

11. Computerprogramm (1530), umfassend Anweisungen, die bei Ausführung durch eine Vorrichtung mit Identitäts-Caching-Funktion, ICF, (1510) zur gesetzlichen Überwachung und Datenerhaltung in einem Besucher-Kommunikationsnetzwerk (1420) für eine oder mehrere ankommende roamende Benutzereinrichtungen, UEs, (1410, 1415) die ICF-Vorrichtung (1510) zu Folgendem veranlassen:
- Empfangen von Signalisierung (1515) in Bezug auf eine oder mehrere ankommende roamenden UEs (1410, 1415), wobei die Signalisierung (1515) eine permanente Abonnementkennung, SUPI, und eine generische öffentliche Abonnementkennung, GPSI, die jeder der einen oder der mehreren ankommenden roamenden UEs (1410, 1415) entsprechen, und eine Kennung einer bedienenden Zugangs- und Mobilitätsverwaltungsfunktion, AMF, für jede der einen oder der mehreren ankommenden roamenden UEs (1410, 1415) umfasst;
- Speichern einer Assoziation zwischen der GPSI, der entsprechenden SUPI und der Kennung der bedienenden AMF für jede der einen oder der mehreren ankommenden roamenden UEs (1410, 1415);
- Empfangen einer Abfragenachricht (1620), die eine GPSI einer ankommenden roamenden Ziel-UE enthält, von einer Lawful Interception Gateway Mobile Location Centre-Vorrichtung, LI-GMLC-Vorrichtung, (1610) und Anfordern einer assoziierten SUPI und AMF-Kennung, die der GPSI entsprechen; und
- Senden einer Antwortnachricht (1630), die die assoziierte SUPI und die Kennung der bedienenden AMF umfasst, die der GPSI für die ankommende roamende UE entsprechen, an die LI-GMLC-Vorrichtung (1610).

12. Computerprogramm (1630), umfassend Anweisungen, die bei Ausführung auf einer Lawful Interception Gateway Mobile Location Centre-Vorrichtung, LI-GMLC-Vorrichtung, (1610) in einem Besucher-Kommunikationsnetzwerk (1420) für eine oder mehrere ankommende roamende Benutzereinrichtungen, UEs, (1410, 1415) die LI-GMLC-Vorrichtung (1610) zu Folgendem veranlassen:
- Empfangen einer ersten Positionsbestimmungsanforderung (1820) für eine ankommende roamende Ziel-UE von einer Lawful Interception Management System-Vorrichtung, LI-MS-Vorrichtung, (1810), wobei die erste Positionsbestimmungsanforderung eine generische öffentliche Abonnementkennung, GPSI, umfasst, die der ankommenden roamenden Ziel-UE entspricht;
- Senden einer Abfragenachricht (1620) zum Erhalten einer permanenten Abonnementkennung, SUPI, die mit der GPSI assoziiert ist und der ankommenden roamenden Ziel-UE entspricht, an eine Vorrichtung mit Identitäts-Caching-Funktion, ICF, (1510);
- Empfangen einer Antwortnachricht (1630), die die SUPI, die der ankommenden roamenden Ziel-UE entspricht, und eine Kennung einer bedienenden AMF umfasst, die der ankommenden roamenden Ziel-UE entspricht, von der ICF-Vorrichtung (1510); und
- Senden einer zweiten Positionsbestimmungsanforderung (1920) an eine Vorrichtung mit Zugangs- und Mobilitätsverwaltungsfunktion, AMF, (1910), die mit der Kennung der bedienenden AMF assoziiert ist, wobei die zweite Positionsbestimmungsanforderung (1920) die SUPI umfasst;
- Empfangen von Positionsinformationen (1930), die der ankommenden roamenden Ziel-UE entsprechen, von der AMF-Vorrichtung (1910);
- Senden der Positionsinformationen (1930), die der ankommenden roamenden Ziel-UE entsprechen, an die LI-MS-Vorrichtung (1810).

13. Computerlesbares Medium, umfassend ein Computerprogramm nach Anspruch 5, 6, 11 oder/oder 12.

## Revendications

1. Dispositif de fonction d'état de système de gestion de miroir d'interception légale, LMISF, (310) pour une interception légale et une rétention légale de données dans un réseau de communication visité (220) pour un ou plusieurs équipements utilisateurs, UE, itinérants entrants (210, 215), le dispositif LMISF (310) étant configuré pour :
- recevoir une signalisation (315) liée aux un ou plusieurs UE itinérants entrants (210, 215), dans lequel la signalisation (315) comprend un numéro d'annuaire d'abonnés international de station mobile, MSISDN, et une identité d'abonné mobile internationale, IMSI, correspondant à chacun des un ou plusieurs UE itinérants entrants (210, 215), et un identifiant d'entité de gestion de mobilité, MME, de desserte pour chacun des un ou plusieurs UE itinérants entrants (210, 215) ;
- stocker une association entre le MSISDN, l'IMSI correspondante et l'identifiant de MME de desserte pour chacun des un ou plusieurs UE itinérants entrants (210, 215) ;
- recevoir, depuis un dispositif de centre de localisation mobile de passerelle d'interception légale, LI-GMLC, (410), un message d'interrogation (420) contenant un MSISDN d'un UE itinérant entrant cible et demandant une IMSI associée et un identifiant de MME de desserte correspondant au MSISDN ; et
- transmettre, au dispositif LI-GMLC (410), un message de réponse (430) comprenant l'IMSI associée et l'identifiant de MME de desserte correspondant au MSISDN pour l'UE itinérant entrant cible si le MSISDN de l'UE itinérant entrant cible est stocké dans le dispositif LMISF (310).

2. Dispositif de centre de localisation mobile de passerelle d'interception légale, LI-GMLC, (410) dans un réseau de communication visité (220) pour un ou plusieurs équipements utilisateurs, UE, itinérants entrants (210, 215), étant configuré pour :
- recevoir, depuis un dispositif de système de gestion d'interception légale, LI-MS, (610), une première demande de positionnement (620) pour un équipement utilisateur, UE, itinérant entrant cible, la première demande de positionnement (630) comprenant un numéro d'annuaire d'abonnés international de station mobile, MSISDN, correspondant à l'UE itinérant entrant ;
- transmettre, à un dispositif de fonction d'état de système de gestion de miroir d'interception légale, LMISF, (310), un message d'interrogation (420) pour obtenir une IMSI associée au MSISDN correspondant à l'UE itinérant entrant cible ;
- recevoir, depuis le dispositif LMISF (310), un message de réponse (430) comprenant l'IMSI correspondant à l'UE itinérant entrant cible, et un identifiant de MME de desserte correspondant à l'UE itinérant entrant cible ; et
- transmettre, à un dispositif MME (710) associé à l'identifiant de MME de desserte, une deuxième demande de positionnement (720), la deuxième demande de positionnement (720) comprenant l'IMSI ;
- recevoir, depuis le dispositif MME (710), des informations de position (730) correspondant à l'UE itinérant entrant cible ;
- transmettre, au LI-MS (610), les informations de position (730) correspondant à l'UE itinérant entrant cible.

3. Procédé (100) réalisé par un dispositif de fonction d'état de système de gestion de miroir d'interception légale, LMISF, (310) pour une interception légale et une rétention légale de données dans un réseau de communication visité (220) pour un ou plusieurs équipements utilisateurs, UE, itinérants entrants (210, 215), le procédé (100) comprenant :
- la réception (110) d'une signalisation (315) liée aux un ou plusieurs UE itinérants entrants (210, 215), dans lequel la signalisation (315) comprend un numéro d'annuaire d'abonnés international de station mobile, MSISDN, et une identité d'abonné mobile internationale, IMSI, correspondant à chacun des un ou plusieurs UE itinérants entrants (210, 215), et un identifiant d'entité de gestion de mobilité, MME, de desserte pour chacun des un ou plusieurs UE itinérants entrants (210, 215) ;
- le stockage (120) d'une association entre le MSISDN, l'IMSI correspondante et l'identifiant de MME de desserte pour chacun des un ou plusieurs UE itinérants entrants (210, 215) ;
- la réception (130), depuis un dispositif de centre de localisation mobile de passerelle d'interception légale, LI-GMLC, (410), d'un message d'interrogation (420) contenant un MSISDN d'un UE itinérant entrant cible et demandant une IMSI associée et un identifiant de MME de desserte correspondant au MSISDN ; et
- la transmission (140), au dispositif LI-GMLC (410), d'un message de réponse (430) comprenant l'IMSI associée et l'identifiant de MME de desserte correspondant au MSISDN pour l'UE itinérant entrant cible si le MSISDN de l'UE itinérant entrant cible est stocké dans le dispositif LMISF.

4. Procédé (500) réalisé par un dispositif de centre de localisation mobile de passerelle d'interception légale, LI-GMLC, (410) dans un réseau de communication visité (220) pour un ou plusieurs équipements utilisateurs, UE, itinérants entrants (210, 215), le procédé (500) comprenant :
- la réception (510), depuis un dispositif de système de gestion d'interception légale, LI-MS, (610), d'une première demande de positionnement (620) pour un équipement utilisateur, UE, itinérant entrant cible, la première demande de positionnement (620) comprenant un numéro d'annuaire d'abonnés international de station mobile, MSISDN, correspondant à l'UE itinérant entrant ;
- la transmission (520), à un dispositif de fonction d'état de système de gestion de miroir d'interception légale, LMISF, (310), d'un message d'interrogation (420) pour obtenir une IMSI associée au MSISDN correspondant à l'UE itinérant entrant cible ;
- la réception (530), depuis le dispositif LMISF (310), d'un message de réponse (430) comprenant l'IMSI correspondant à l'UE itinérant entrant cible, et un identifiant de MME de desserte correspondant à l'UE itinérant entrant cible ; et
- la transmission (540), à un dispositif d'entité de gestion de mobilité, MME, (710) associé à l'identifiant de MME de desserte, d'une deuxième demande de positionnement, la deuxième demande de positionnement comprenant l'IMSI ;
- la réception (550), depuis le dispositif MME (710), d'informations de position (730) correspondant à l'UE itinérant entrant cible ;
- la transmission (560), au dispositif LI-MS (610), des informations de position (730) correspondant à l'UE itinérant entrant cible.

5. Programme informatique (1130) comprenant des instructions qui, lorsqu'elles sont exécutées sur un dispositif de fonction d'état de système de gestion de miroir d'interception légale, LMISF, (310) pour une interception légale et une rétention légale de données dans un réseau de communication visité (220) pour un ou plusieurs équipements utilisateurs, UE, itinérants entrants (210, 215), amènent le dispositif LMISF (310) à :
- recevoir une signalisation (315) liée aux un ou plusieurs UE itinérants entrants (210, 215), dans lequel la signalisation (315) comprend un numéro d'annuaire d'abonnés international de station mobile, MSISDN, et une identité d'abonné mobile internationale, IMSI, correspondant à chacun des un ou plusieurs UE itinérants entrants (210, 215), et un identifiant d'entité de gestion de mobilité, MME, de desserte pour chacun des un ou plusieurs UE itinérants entrants (210, 215) ;
- stocker une association entre le MSISDN, l'IMSI correspondante et l'identifiant de MME de desserte pour chacun des un ou plusieurs UE itinérants entrants (210, 215) ;
- recevoir, depuis un dispositif de centre de localisation mobile de passerelle d'interception légale, LI-GMLC, (410), un message d'interrogation (420) contenant un MSISDN d'un UE itinérant entrant cible et demandant une IMSI associée et un identifiant de MME correspondant au MSISDN ; et
- transmettre, au dispositif LI-GMLC (410), un message de réponse (430) comprenant l'IMSI associée et l'identifiant de MME de desserte correspondant au MSISDN pour l'UE itinérant entrant cible si le MSISDN de l'UE itinérant entrant cible est stocké dans le dispositif LMISF (310).

6. Programme informatique (1230) comprenant des instructions qui, lorsqu'elles sont exécutées par un dispositif de centre de localisation mobile de passerelle d'interception légale, LI-GMLC, (410) dans un réseau de communication visité (220) pour un ou plusieurs équipements utilisateurs, UE, itinérants entrants (210, 215), amènent le dispositif LI-GMLC (410) à :
- recevoir, depuis un dispositif de système de gestion d'interception légale, LI-MS, (610), une première demande de positionnement (620) pour un équipement utilisateur, UE, itinérant entrant cible, la première demande de positionnement (620) comprenant un numéro d'annuaire d'abonnés international de station mobile, MSISDN, correspondant à l'UE itinérant entrant ;
- transmettre, à un dispositif de fonction d'état de système de gestion de miroir d'interception légale, LMISF, (310), un message d'interrogation (420) pour obtenir une IMSI associée au MSISDN correspondant à l'UE itinérant entrant cible ;
- recevoir, depuis le dispositif LMISF (310), un message de réponse (430) comprenant l'IMSI correspondant à l'UE itinérant entrant cible, et un identifiant de MME de desserte correspondant à l'UE itinérant entrant cible ; et
- transmettre, à un dispositif d'entité de gestion de mobilité, MME, (710) associé à l'identifiant de MME de desserte, une deuxième demande de positionnement (720), la deuxième demande de positionnement (720) comprenant l'IMSI ;
- recevoir, depuis le dispositif MME (710), des informations de position (730) correspondant à l'UE itinérant entrant cible ;
- transmettre, au dispositif LI-MS (610), les informations de position (730) correspondant à l'UE itinérant entrant cible.

7. Dispositif de fonction de mise en mémoire cache d'identité, ICF, (1410) pour une interception légale et une rétention légale de données dans un réseau de communication visité (1420) pour un ou plusieurs équipements utilisateurs, UE, itinérants entrants (1410, 1415), le dispositif ICF (1510) étant configuré pour :
- recevoir une signalisation (1515) liée à un ou plusieurs UE itinérants entrants (1410, 1415), dans lequel la signalisation (1515) comprend un identifiant permanent d'abonnement, SUPI, et un identifiant d'abonnement public générique, GPSI, correspondant à chacun des un ou plusieurs UE itinérants entrants (1410, 1415), et un identifiant de fonction de gestion et de mobilité d'accès, AMF, de desserte pour chacun des un ou plusieurs UE itinérants entrants (1410, 1415) ;
- stocker une association entre le GPSI, le SUPI correspondant et l'identifiant d'AMF de desserte pour chacun des un ou plusieurs UE itinérants entrants (1410, 1415) ;
- recevoir, depuis un dispositif de centre de localisation mobile de passerelle d'interception légale, LI-GMLC, (1610), un message d'interrogation (1620) contenant un GPSI d'un UE itinérant entrant cible et demandant un SUPI associé et un identifiant d'AMF correspondant au GPSI ; et
- transmettre, au LI-GMLC, un message de réponse (1630) comprenant le SUPI associé et l'identifiant d'AMF de desserte correspondant au GPSI pour l'UE itinérant entrant cible.

8. Dispositif de centre de localisation mobile de passerelle d'interception légale, LI-GMLC, (1610) dans un réseau de communication visité (1420) pour un ou plusieurs équipements utilisateurs, UE, itinérants entrants (1410, 1415), étant configuré pour :
- recevoir, depuis un dispositif de système de gestion d'interception légale, LI-MS, (1810), une première demande de positionnement (1820) pour un équipement utilisateur, UE, itinérant entrant cible, la première demande de positionnement (1820) comprenant un identifiant d'abonnement public générique, GPSI, correspondant à l'UE itinérant entrant cible ;
- transmettre, à un dispositif de fonction de mise en mémoire cache d'identité, ICF, (1510), un message d'interrogation (1620) pour obtenir un identifiant permanent d'abonnement, SUPI, associé au GPSI correspondant à l'UE itinérant entrant cible ;
- recevoir, depuis le dispositif ICF (1510), un message de réponse (1630) comprenant le SUPI correspondant à l'UE itinérant entrant cible, et un identifiant d'AMF de desserte correspondant à l'UE itinérant entrant cible ; et
- transmettre, à un dispositif de fonction de gestion et de mobilité d'accès, AMF, (1910) associé à l'identifiant d'AMF de desserte, une deuxième demande de positionnement, la deuxième demande de positionnement comprenant le SUPI ;
- recevoir, depuis le dispositif AMF (1910), des informations de position (1930) correspondant à l'UE itinérant entrant cible ;
- transmettre, au dispositif LI-MS (1810), les informations de position (1930) correspondant à l'UE itinérant entrant cible.

9. Procédé (1700) réalisé par un dispositif de fonction de mise en mémoire cache d'identité, ICF, (1510) pour une interception légale et une rétention légale de données dans un réseau de communication visité (1420) pour un ou plusieurs équipements utilisateurs, UE, itinérants entrants (1410, 1415), le procédé comprenant :
- la réception (1310) d'une signalisation (1515) liée à un ou plusieurs UE itinérants entrants (1410, 1415), dans lequel la signalisation (1515) comprend un identifiant permanent d'abonnement, SUPI, et un identifiant d'abonnement public générique, GPSI, correspondant à chacun des un ou plusieurs UE itinérants entrants (1410, 1415), et un identifiant de fonction de gestion et de mobilité d'accès, AMF, de desserte pour chacun des un ou plusieurs UE itinérants entrants (1410, 1415) ;
- le stockage (1320) d'une association entre le GPSI, le SUPI correspondant et l'identifiant d'AMF de desserte pour chacun des un ou plusieurs UE itinérants entrants (1410, 1415) ;
- la réception (1330), depuis un dispositif de centre de localisation mobile de passerelle d'interception légale, LI-GMLC, (1610), d'un message d'interrogation (1620) contenant un GPSI d'un UE itinérant entrant cible et demandant un SUPI associé et un identifiant d'AMF correspondant au GPSI ; et
- la transmission (1340), au dispositif LI-GMLC (1610), d'un message de réponse (1630) comprenant le SUPI associé et l'identifiant d'AMF de desserte correspondant au GPSI pour l'UE itinérant entrant cible.

10. Procédé (1700) réalisé par un dispositif de centre de localisation mobile de passerelle d'interception légale, LI-GMLC, (1610) dans un réseau de communication visité (1420) pour un ou plusieurs équipements utilisateurs, UE, itinérants entrants (1410, 1415), le procédé (1700) comprenant :
- la réception (1710), depuis un dispositif de système de gestion d'interception légale, LI-MS, (1810), d'une première demande de positionnement (1820) pour un UE itinérant entrant cible, la première demande de positionnement (1820) comprenant un identifiant d'abonnement public générique, GPSI, correspondant à l'UE itinérant entrant cible ;
- la transmission (1720), à un dispositif de fonction de mise en mémoire cache d'identité, ICF, (1510), d'un message d'interrogation (1620) pour obtenir un identifiant permanent d'abonnement, SUPI, associé au GPSI correspondant à l'UE itinérant entrant cible ;
- la réception (1730), depuis le dispositif ICF (1510), d'un message de réponse (1630) comprenant le SUPI correspondant à l'UE itinérant entrant cible, et un identifiant d'AMF de desserte correspondant à l'UE itinérant entrant cible ; et
- la transmission (1740), à un dispositif de fonction de gestion et de mobilité d'accès, AMF, (1910) associé à l'identifiant d'AMF de desserte, d'une deuxième demande de positionnement, la deuxième demande de positionnement comprenant le SUPI ;
- la réception (1750), depuis le dispositif AMF (1910), d'informations de position (1930) correspondant à l'UE itinérant entrant cible ;
- la transmission (1760), au dispositif LI-MS (1810), des informations de position (1930) correspondant à l'UE itinérant entrant cible.

11. Programme informatique (1530) comprenant des instructions qui, lorsqu'elles sont exécutées par un dispositif de fonction de mise en mémoire cache d'identité, ICF, (1510) pour une interception légale et une rétention légale de données dans un réseau de communication visité (1420) pour un ou plusieurs équipements utilisateurs, UE, itinérants entrants (1410, 1415), amènent le dispositif ICF (1510) à :
- recevoir une signalisation (1515) liée à un ou plusieurs UE itinérants entrants (1410, 1415), dans lequel la signalisation (1515) comprend un identifiant permanent d'abonnement, SUPI, et un identifiant d'abonnement public générique, GPSI, correspondant à chacun des un ou plusieurs UE itinérants entrants (1410, 1415), et un identifiant de fonction de gestion et de mobilité d'accès, AMF, de desserte pour chacun des un ou plusieurs UE itinérants entrants (1410, 1415) ;
- stocker une association entre le GPSI, le SUPI correspondant et l'identifiant d'AMF de desserte pour chacun des un ou plusieurs UE itinérants entrants (1410, 1415) ;
- recevoir, depuis un dispositif de centre de localisation mobile de passerelle d'interception légale, LI-GMLC, (1610), un message d'interrogation (1620) contenant un GPSI d'un UE itinérant entrant cible et demandant un SUPI associé et un identifiant d'AMF correspondant au GPSI ; et
- transmettre, au dispositif LI-GMLC (1610), un message de réponse (1630) comprenant le SUPI associé et l'identifiant d'AMF de desserte correspondant au GPSI pour l'UE itinérant entrant cible.

12. Programme informatique (1630) comprenant des instructions qui, lorsqu'elles sont exécutées par un dispositif de centre de localisation mobile de passerelle d'interception légale, LI-GMLC, (1610) dans un réseau de communication visité (1420) pour un ou plusieurs équipements utilisateurs, UE, itinérants entrants (1410, 1415), amènent le dispositif LI-GMLC (1610) à :
- recevoir, depuis un dispositif de système de gestion d'interception légale, LI-MS, (1810), une première demande de positionnement (1820) pour un UE itinérant entrant cible, la première demande de positionnement comprenant un identifiant d'abonnement public générique, GPSI, correspondant à l'UE itinérant entrant cible ;
- transmettre, à un dispositif de fonction de mise en mémoire cache d'identité, ICF, (1510), un message d'interrogation (1620) pour obtenir un identifiant permanent d'abonnement, SUPI, associé au GPSI correspondant à l'UE itinérant entrant cible ;
- recevoir, depuis le dispositif ICF (1510), un message de réponse (1630) comprenant le SUPI correspondant à l'UE itinérant entrant cible, et un identifiant d'AMF de desserte correspondant à l'UE itinérant entrant cible ; et
- transmettre, à un dispositif de fonction de gestion et de mobilité d'accès, AMF, (1910) associé à l'identifiant d'AMF de desserte, une deuxième demande de positionnement (1920), la deuxième demande de positionnement (1920) comprenant le SUPI ;
- recevoir, depuis le dispositif AMF (1910), des informations de position (1930) correspondant à l'UE itinérant entrant cible ;
- transmettre, au dispositif LI-MS (1810), les informations de position (1930) correspondant à l'UE itinérant entrant cible.

13. Support de stockage lisible par ordinateur comprenant un programme informatique selon les revendications 5, 6, 11 et/ou 12.
